(19) Europäisches Patentamt / European Patent Office / Office européen des brevets

(11) **EP 4 201 898 A1**

(12) **EUROPEAN PATENT APPLICATION**

(43) Date of publication:
**28.06.2023 Bulletin 2023/26**

(21) Application number: **21216667.2**

(22) Date of filing: **21.12.2021**

(51) International Patent Classification (IPC):
$C03C\ 3/085^{(2006.01)}$    $C03C\ 3/093^{(2006.01)}$
$C03C\ 3/097^{(2006.01)}$    $C03C\ 3/11^{(2006.01)}$
$C03C\ 4/20^{(2006.01)}$    $C03C\ 21/00^{(2006.01)}$

(52) Cooperative Patent Classification (CPC):
**C03C 3/11; C03C 3/085; C03C 3/093; C03C 3/097; C03C 4/20; C03C 21/002**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SCHOTT AG**
**55122 Mainz (DE)**

(72) Inventors:
• **Krüger, Susanne**
**55127 Mainz (DE)**
• **Weißhuhn, Julia**
**55122 Mainz (DE)**
• **Fotheringham, Ulrich**
**65191 Wiesbaden (DE)**
• **Weizhi, Deng**
**215000 Suzhou New District (CN)**
• **Xiao, Wei**
**215011 Suzhou (CN)**

(74) Representative: **Fuchs Patentanwälte Partnerschaft mbB**
**Tower 185**
**Friedrich-Ebert-Anlage 35-37**
**60327 Frankfurt am Main (DE)**

(54) **GLASS COMPOSITION, GLASS ARTICLE AND METHOD OF MAKING IT**

(57)     This disclosure relates to glasses and glass articles. The glass articles include flat glass suitable for use in display devices, such as electronic devices, including smartphones, smart watches and tablet computers. A method of making glass articles is described as well.

EP 4 201 898 A1

**Description**

This disclosure relates to glasses and glass articles. The glass articles include flat glass suitable for use in display devices, such as electronic devices, including smartphones, smart watches and tablet computers. A method of making glass articles is described as well.

Background

Foldable display devices, such as smartphones and tablet computers, are becoming more and more popular. Foldable devices combine the benefits of a large screen when unfolded and portable size when folded. In order for a glass sheet to be usable in such a foldable display device, it has to be extremely thin. A very thin glass is prone to breakage. Still, such a glass must be sufficiently strong to withstand repeated folding and unfolding operations.

Typically, aluminosilicate glass is used in portable electronic devices. Aluminosilicate glass has certain properties that make it well suited for use as a display glass. These properties include the ability to be produced in very small thicknesses. For a display cover glass to be flexible or foldable, its thickness must be very small, e.g. below 100 $\mu$m, or even 30 $\mu$m. Impact resistance diminishes with smaller thickness. As a consequence, measures must be taken to strengthen the glass. Some prior art glasses can be strengthened but lack chemical resistance.

It would be good to have a glass that overcomes the shortcomings of the prior art.

Detailed description

In a first aspect, this disclosure relates to a glass comprising

    i. $SiO_2$,

    ii. $Al_2O_3$ and/or $B_2O_3$ in a total amount of 5.0 to 25.0% by weight,

    ii. $ZrO_2$ and/or $Y_2O_3$ in a total amount of at least 3.0% by weight,

    iii. a total amount of up from 10.0 to 40.0% by weight of one or more oxides selected from ZnO, $Li_2O$, $Na_2O$, $K_2O$, MgO, CaO, SrO, BaO, and combinations thereof, and

    iv. optionally one or more components selected from $P_2O_5$ and $TiO_2$.

In a second aspect, this disclosure relates to a glass comprising the following components in percent by weight

| | |
|---|---|
| $SiO_2$ | 50.0 to 70.0 |
| $Al_2O_3$ | 0 to 18.0 |
| $B_2O_3$ | 0 to 12.0 |
| $P_2O_5$ | 0 to 8.0 |
| $TiO_2$ | 0 to 3.0 |
| $ZrO_2$ | 3.0 to 14.0 |
| ZnO | 0 to 5.0 |
| $Y_2O_3$ | 0 to 20.0 |
| $R_2O$ | 10.0 to 30.0 |
| R'O + ZnO | 0 to 15.0 |

wherein $R_2O$ is the sum of the amounts of the alkali metal oxides and R'O is the sum of the amounts of all alkali earth metal oxides.

The inventors found that the glass according to the first and second aspects provides for a novel combination of desirable properties. The glass has remarkable susceptibility to chemical strengthening. This means that when immersed in a salt bath for chemical toughening, the glass will build a high compressive stress on its surface within a very short time. In an embodiment, this compressive stress susceptibility will be as high as 800 MPa or even 1000 MPa within 30 minutes of chemical toughening. Despite this remarkable susceptibility to compressive stress, the glass has only moderate thermal expansion, such as a coefficient of thermal expansion of less than 8.8 ppm/K or even less than 8.0 ppm/K. This very moderate thermal expansion allows for the production of articles with excellent dimensional characteristics. During production of thin glass, for example in a down draw process, the glass will experience fast cooling. Typically, the cooling rates will not be exactly the same for all portions of the glass. This will lead to warp in the glass article. Warp will be higher for articles made of glass with higher coefficients of thermal expansion. Because the glass of this disclosure has low coefficients of thermal expansion, glass articles with particularly low warp can be produced.

Further, the glass of this disclosure also has excellent chemical resistance. Chemical resistance is very useful in glass for display applications. Prior art glasses with considerable chemical strengthening characteristics usually have mediocre or insufficient chemical resistance.

In a third aspect, this disclosure relates to a glass article comprising or consisting of a glass described herein.

In a fourth aspect, this disclosure relates to a glass article comprising or consisting of a glass described herein, and comprising an ion-exchanged layer on one or both of its major surfaces. In a fifth aspect, this disclosure relates an electronic device comprising a glass or a glass article as described herein.

In a sixth aspect, this disclosure relates to a method of making a glass, or a glass article of this disclosure.

### Definitions

Coefficient of thermal expansion ("CTE") is the average coefficient of linear thermal expansion in a temperature range from 20°C to 300°C. It is determined in accordance with DIN ISO 7991:1987.

Compressive stress susceptibility ("CSS", or "CSS score") is given in MPa. It is the amount of compressive stress measured in a specimen of the glass under specific test conditions. For this test, the specimen may be in the form of a sheet of 200 $\mu$m or 30 $\mu$m thickness. The specimen is subjected to ion exchange treatment in an alkali nitrate salt bath (100%) for a duration of 30 minutes, or 15 minutes. The temperature may be chosen such that the highest chemical stress is obtained. The alkali nitrate salt depends on the kind of ion exchange treatment to be performed, i.e. which ions need to be exchanged. Optionally, the alkali nitrate salt is $KNO_3$ and the bath temperature is 440°C. The fact that a specimen of 200 $\mu$m or 30 $\mu$m thickness in the form of a sheet is used to determine CSS does not mean a restriction to glass articles in sheet form, or even to sheets of that thickness. Instead, CSS is a property of the glass material that is measured on a sheet prepared from the glass. Whereas CSS is influenced by the thermal history of a glass, it is a feature of the glass material or glass articles. Notably, CSS is a feature of the un-strengthened material or article, i.e. untreated by ion exchange. The different thicknesses that the CSS values relate to are indicated as an index, e.g. $CSS_{30\mu m}$ for a 30 $\mu$m thick sheet.

"1000 MPa IOX-time" is the time of ion exchange treatment needed by a glass to build a compressive stress on its surface of at least 1000 MPa. The corresponding experiment is the same as for CSS measurement, i.e. the specimen is a 200 $\mu$m thick glass sheet immersed in an alkali nitrate bath. The temperature may be chosen at 380°C for sodium nitrate baths, and at 440°C for the other alkali nitrates. The "1000 MPa IOX-time" is reached when the specimen has a compressive stress of at least 1000 MPa.

Compressive stress (CS) is the induced compression of the glass network after ion exchange on the surface layer of glass. CS usually decreases from a maximum value at the surface of the glass layer (surface CS) towards the inside of the glass layer. As is customary in the art, any indication of CS in this disclosure relates to the maximum value of the respective surface. Commercially available test machines such as FSM6000LE (company ORIHARA INDUSTRIAL CO. LTD) or SLP1000 (company "ORIHARA", Japan) can be used to measure the CS .

Depth of layer (DoL) is the thickness of the layer at the surface of a glass article where CS exists, which essentially corresponds to the thickness of an ion exchanged layer. Commercially available test machines such as FSM6000 (company "Luceo Co., Ltd.", Japan/Tokyo) can be used to measure the DoL by a wave guide mechanism.

"Diffusivity" (D in $\mu$m$^2$/h) is a material property of a glass that describes its ability to build an ion-exchanged layer upon chemical toughening/ion exchange. This property can be calculated by examining the depth of the ion-exchanged layer (DoL in $\mu$m) upon ion exchange after a certain ion exchange time (IET in hours). The higher the diffusivity, the deeper the DoL after a given time of ion exchange. The corresponding formula is $D = \dfrac{DoL^2}{7.84 \cdot IET}$ . In this disclosure, if nothing else is indicated, any indication of D relates to chemical toughening with an alkali nitrate salt (100%) for 30 minutes, wherein for small glass thicknesses the duration of chemical toughening can be reduced, e.g. to 15 minutes. The temperature may be chosen at 380°C for sodium nitrate baths, and at 440°C for the other alkali nitrates. The alkali nitrate is the nitrate of the alkali metal ion that has the next larger diameter compared to the most abundant alkali metal oxide in the glass composition. The diameters of the alkali metal ions are Cs>K>Na>Li, e.g. if the most abundant alkali metal oxide in the glass is sodium, D is indicated for ion exchange with 100% $KNO_3$ at 440°C for 30 minutes.

Central tension (CT): When CS is induced on one side or both sides of a glass sheet, to balance the stress

according to the 3rd principle of Newton's law, a tension stress must be induced in the center region of glass, and it is called central tension. CT can be calculated from measured CS and DoL.

As used herein "surface roughness" relates to the average roughness $R_a$, which is a measure of the texture of a surface. Commonly, amplitude parameters characterize the surface based on the vertical deviations of the roughness profile from the mean line. $R_a$ is the arithmetic average of the absolute values of these vertical deviations. It can be determined according to DIN EN ISO 4287:2010-07.

Warp is the difference between the maximum and minimum distances of the median surface of a free, unclamped glass article from a reference plane. The warp may be measured as described in SEMI MF1390.

The total thickness variation (TTV) is the difference between the highest thickness and the lowest thickness of a glass article. It may be measured as described in SEMI MF1530.

"Hydrolytic resistance" relates to the extracted $Na_2O$ equivalent. It is determined in accordance with ISO 719:2020-09. It is a measure of the extractability of the basic compounds from the glass in water at 98°C. The result of the measurement is the extracted $Na_2O$ equivalent in $\mu$g per g of glass.

"Alkali resistance" relates to the resistance of a glass to alkaline attack. It is determined according to ISO 695:1991-05 using a boiling aqueous solution of sodium carbonate and sodium hydroxide. The test is performed as described under section 6.2 "glass as a material". The result is the loss in mass per surface area of the glass sample in mg/dm$^2$.

"Acid resistance" relates to the resistance of a glass to acid attack. It is determined according to DIN 12116:2001-03 using a boiling aqueous solution of hydrochloric acid. The test is performed as described under section 6.3 "glass as a material". The result is the loss in mass per surface area of the glass sample in mg/dm$^2$.

"$T_4$" is the temperature at which the glass has a viscosity of $10^4$ dPa s. $T_4$ can be measured by methods known to a person skilled in the art for determining the viscosity of glass, e.g. in accordance with ISO 7884-2:1987-12. "$T_{13}$" is the temperature at which the glass has a viscosity of $10^{13}$ dPa s. Similarly, other temperatures indicated as $T_n$ refer to the temperature where the glass has a viscosity of $10^n$ dPa s.

Three-point bending strength is a test of the flexural strength of a material. It may be determined using the method described in ASTM C1161-13. An exemplary test setup is as follows: Cylindrical steel bearings of 2 mm radius; support span 16 mm; specimens of size 28*28*0.2 mm$^3$; prepared according to Standard procedure 7.2.4; loading speed of 5 mm/min.

Vickers Hardness was determined using a standard Vickers indenter as specified in ASTM C 1327 (2015). The following parameters were used: force $F_n$ (max) = 1 N; approximation speed = 4 $\mu$m/min; loading rate 2 N/min; holding time 20 s; release rate 6 N/min.

Typically, the Vogel-Fulcher-Tammann (VFT) equation is used to calculate the temperature needed to achieve a certain viscosity of a glass (see the ISO 7884 series of standards e.g. ISO 7884-1:1987-12, 7884-2:1987-12; 7884-3:1987-12; 7884-4:1987-12):

$$\lg \eta = A + \frac{B}{T - T_0}$$

In the VFT equation, $\eta$ is the viscosity, A and B are parameters of the material, T is the temperature and $T_0$ is the Vogel temperature. A, B and $T_0$ are constant for any specific glass. The indication of these constants provides for a more detailed information about the viscosity behaviour of a certain glass composition.

"Major surfaces" of an article are the two surfaces having the largest areas among all surfaces of the article.

Compositional aspects

In this disclosure, the alkali metal oxides $R_2O$ include the oxides of lithium, sodium, potassium and cesium. The alkali earth metal oxides R'O include the oxides of magnesium, calcium, strontium and barium. In some embodiments, the glass is free of cesium, strontium and/or barium.

The glass of this disclosure may comprise

  i. $SiO_2$,

  ii. $Al_2O_3$ and/or $B_2O_3$ in a total amount of 5.0 to 25.0% by weight,

  ii. $ZrO_2$ and/or $Y_2O_3$ in a total amount of at least 3.0% by weight,

  iii. a total amount of up from 10.0 to 40.0% by weight of one or more oxides selected from ZnO, $Li_2O$, $Na_2O$, $K_2O$,

MgO, CaO, SrO, BaO, and combinations thereof, and

iv. optionally one or more components selected from $P_2O_5$ and $TiO_2$.

Optionally, the glass comprises the following components in percent by weight

| | |
|---|---|
| $SiO_2$ | 50.0 to 70.0 |
| $Al_2O_3$ | 0 to 18.0 |
| $B_2O_3$ | 0 to 12.0 |
| $P_2O_5$ | 0 to 8.0 |
| $TiO_2$ | 0 to 3.0 |
| $ZrO_2$ | 3.0 to 14.0 |
| $ZnO$ | 0 to 5.0 |
| $Y_2O_3$ | 0 to 20.0 |
| $R_2O$ | 10.0 to 30.0 |
| R'O + ZnO | 0 to 15.0 |

wherein $R_2O$ is the sum of the amounts of the alkali metal oxides and R'O is the sum of the amounts of all alkali earth metal oxides.

In embodiments, the glass has a sum of the amounts of alkali metal oxides, alkali earth metal oxides and ZnO of not more than 27.0% by weight, not more than 25.0% by weight, not more than 23.0% by weight or not more than 20.0% by weight. Optionally, this sum $R_2O$+R'O+ZnO is at least 10.0% by weight, at least 12.0% by weight, or at least 14.0% by weight. In embodiments, this sum range up to 19.5% by weight, up to 19.0% by weight, or up to 18.0% by weight. For example, the sum $R_2O$+R'O+ZnO is from 10.0 to 27.0% by weight, from 12.0 to 25.0% by weight, from 12.0 to 23.0% by weight, or from 14.0 to 19.5% by weight.

The glass may comprise one or more alkali metal oxides. Optionally, a ratio of a second most abundant alkali metal oxide B, and a most abundant alkali metal oxide A in weight percent is less than 0.23, less than 0.22, less than 0.18, less than 0.16, less than 0.12, or less than 0.10. The "most abundant" alkali metal oxide is the one that has the highest proportion in the glass based on weight percentage. Accordingly, the "second most abundant" is the one having the second highest proportion on a weight percent basis and so on. In an embodiment, A is $Na_2O$ and B is $K_2O$, in an alternative embodiment B is $Na_2O$ and A is $K_2O$. In certain embodiments, this ratio may be as low as 0.10 or less, 0.08 or less or even 0.04 or less. In some cases, this ratio may be 0.

In an embodiment, the glass composition has a ratio of the weight amount of $K_2O$ relative to the sum of the weight amounts of $Li_2O$ and $Na_2O$ of less than 0.23, less than 0.22, less than 0.18, less than 0.16, less than 0.12, or less than 0.10. In certain embodiments, this ratio may be as low as 0.10 or less, 0.08 or less or even 0.04 or less. In some cases, this ratio may be 0.

In an alternative embodiment, a ratio of the weight amount of $Na_2O$ relative to the sum of the weight amounts of $Li_2O$ and $K_2O$ of less than 0.23, less than 0.22, less than 0.18, less than 0.16, less than 0.12, or less than 0.10. In certain embodiments, this ratio may be as low as 0.10 or less, 0.08 or less or even 0.04 or less. In some cases, this ratio may be 0.

In an embodiment, the glass has a ratio of the weight amount of $SiO_2$ relative to the sum of the weight amounts of $Li_2O$ and $Na_2O$ of less than 5.5, optionally less than 4.9, or less than 4.5. Optionally, this ratio may be at least 2.0, at least 3.0, or at least 3.5. For example, this ratio may range from 2.0 to 5.5, from 3.0 to 4.9, or from 3.5 to 4.5. The inventors found that this ratio has a positive influence on the thermal expansion and CSS properties of the glass.

In embodiments, a ratio of (a) the content of the second most abundant alkali metal oxide in weight percent to (b) the sum of the contents of $Al_2O_3$ and $B_2O_3$ in weight percent is from 0.0 to 0.4, from 0.0 to 0.3 or from 0.0 to 0.2. This ratio helps to achieve the desired CSS of the glass.

The glass contains $SiO_2$, optionally in amounts of at least 50.0% by weight, at least 51.0% by weight, at least 53.0% by weight, at least 55.0% by weight, or at least 57.0% by weight. In embodiments, the content of $SiO_2$ is up to 70.0% by weight, up to 68.0% by weight, up to 66.0% by weight or up to 64.0% by weight. In certain embodiments, the relative amount of this component is from 50.0 to 70.0% by weight, from 51.0 to 68.0% by weight, from 53.0 to 66.0% by weight or from 55.0 to 64.0% by weight. $SiO_2$ helps to achieve the desired thermal expansion behavior and the chemical resistance property.

$Al_2O_3$ may be used to help achieving the desired susceptibility to chemical strengthening. Optionally, the amount of this component is at least 2.0% by weight, at least 5.0% by weight, at least 7.0% by weight, or at least 9.0% by weight. In embodiments, the content of $Al_2O_3$ may be limited to up to 18.0% by weight, 17.0% by weight, 16.0% by weight, or up to 15.0% by weight. For example, the content of this oxide may range from 0.0 to 18.0% by weight, from 2.0 to 17.0% by weight, or from 5.0 to 16.0% by weight.

The glass may contain $B_2O_3$ in proportions of up to 12.0% by weight, up to 11.0% by weight or up to 10.0% by weight. In some embodiments, the content of this component is as low as 8.0% by weight or less, 5.0% by weight or less, or even 3.0% by weight or less. Some embodiments contain less than 0.1% by weight of $B_2O_3$. If present, $B_2O_3$ helps balance any devitrification tendency that might arise from the use of $ZrO_2$. Optionally, the content of $B_2O_3$ ranges from 0 to 12.0% by weight, from 0 to 11.0% by weight or from 0 to 10.0% by weight. In some embodiments, $B_2O_3$ is used in an amount of at least 1.0% by weight, or at least 2.0% by weight.

The glass may comprise $Al_2O_3$ and/or $B_2O_3$ in a total amount of from 5.0 to 25.0% by weight, optionally, from 7.0 to 22.0% by weight, from 8.5 to 20.5% by weight, or from 10.0 to 17.0% by weight. In an embodiment, the sum of the contents of $Al_2O_3$ and $B_2O_3$ is less than 20.5% by weight, less than 19.5% by weight, less than 18.0% by weight, less than 17.0% by weight, or less than 16.0% by weight. Optionally, the sum of the contents of $Al_2O_3$ and $B_2O_3$ is at least 5.0% by weight, at least 7.0% by weight, at least 8.5% by weight, or at least 10.5% by weight.

$P_2O_5$ is an optional component. It may be used in proportions of at least 0.5% by weight, at least 1.0% by weight, at least 2.0% by weight or at least 3.0% by weight. Suitable upper limits are 8.0% by weight, 7.0% by weight, 6.0% by weight and 5.0% by weight. Optionally, $P_2O_5$ may be used in ranges from 0 to 8.0% by weight, from 1.0 to 7.0% by weight, from 2.0 to 6.0% by weight, or from 3.0 to 5.0% by weight.

Some embodiments include $TiO_2$ as a glass component. It may be used in amounts of from 0 to 3.0% by weight, from 0 to 2.0% by weight, from 0 to 1.0% by weight, or in amount of less than 100 ppm.

$ZrO_2$ is an important component in the glass compositions. It was found that at least one of $ZrO_2$ and $Y_2O_3$ must be present in order to achieve the desired CSS properties. Desirably, the amount of $ZrO_2$ is at least 3.0% by weight, at least 5.0% by weight, at least 6.0% by weight, at least 6.8% by weight, or at least 7.5% by weight. In embodiments, the amount of this component ranges up to 15.0% by weight, up to 14.0% by weight, or up to 13.5% by weight. Optionally, the content of $ZrO_2$ in the glass may range from 3.0 to 15.0% by weight, from 5.0 to 14.0% by weight, from 6.8 to 13.0% by weight, or from 7.5 to 12.5% by weight. In an embodiment, the amount of $ZrO_2$ is at least 4.5% by weight, at least 5.1% by weight, or at least 6.0% by weight. In certain embodiments, the amount of $ZrO_2$ may be at least 8.0% by weight, at least 9.0% by weight, or >10.0% by weight, such as at least 10.1% by weight. Thus, in an embodiment, the amount of $ZrO_2$ may range from 10.1% by weight to 15.0% by weight.

The amount of $Y_2O_3$ may be at least 5.0% by weight, at least 6.0% by weight, at least 7.0% by weight, or at least 8.5% by weight. In embodiments, the amount of this component ranges up to 20.0% by weight, up to 15.0% by weight, up to 10.0% by weight, or up to 5.0% by weight. Optionally, the content of $Y_2O_3$ in the glass may range from 0.0 to 20.0% by weight, from 0.0 to 15.0% by weight, from 0.0 to 10.0% by weight, or from 0.0 to 5.0% by weight.

$ZrO_2$ and/or $Y_2O_3$ may be present in a total amount of at least 3.0% by weight, at least 5.0% by weight, at least 6.0% by weight, or at least 6.5% by weight. In embodiments, the total amount of these components ranges up to 21.0% by weight, up to 19.5% by weight, or up to 19.0% by weight. Optionally, the total content of $ZrO_2$ and/or $Y_2O_3$ in the glass may range from 3.0 to 21.0% by weight, from 5.0 to 21.0% by weight, from 6.0 to 21.0% by weight, or from 6.5 to 19.5% by weight. In certain embodiments, the total content of $ZrO_2$ and/or $Y_2O_3$ may be at least 8.0% by weight, at least 9.0% by weight, or at least 10.1% by weight. Thus, in an embodiment, the total amount of these components may range from 10.1% by weight to 15.0% by weight.

In certain embodiments, the ratio of (a) the sum of the contents of $ZrO_2$ and $Y_2O_3$ in weight percent to (b) the content of $SiO_2$ in weight percent is from 0.08 to 0.40, from 0.10 to 0.35 or from 0.19 to 0.25. In an embodiment, this ratio is at least 0.08, at least 0.10, at least 0.15 or at least 0.19. This ratio may range up to 0.40, up to 0.38, up to 0.35, up to 0.30, or up to 0.25. Optionally, the ratio of (a) the sum of the contents of $ZrO_2$ and $Y_2O_3$ in weight percent to (b) the sum of the contents of $Al_2O_3$ and $B_2O_3$ in weight percent is from 0.30 to 2.0, such as from 0.35 to 1.80, from 0.50 to 1.50, from 0.65 to 1.25 or from 0.75 to 1.10. In embodiments, this ratio is at least 0.30, at least 0.35, at least 0.50, at least 0.65, or at least 0.75. This ratio may be up to 2.0, up to 1.80, up to 1.50, up to 1.25, up to 1.10, or up to 0.75.

In certain embodiments, the sum of the contents of $Al_2O_3$ and $ZrO_2$ in weight percent is from 10.0 to 30.0, 15.0 to 28.0 or 22.0 to 26.0. The ratio of the amount of $ZrO_2$ to the amount of $Al_2O_3$ in percent by weight may be at least 0.30, at least 0.35, at least 0.45, at least 0.50, or even at least 0.70. Optionally, this ratio may be up to 1.80, up to 1.30, or up to 1.10. In some embodiments, the ratio is from 0.30 to 1.80, from 0.45 to 1.30, or from 0.50 to 1.10. It was found that within the compositional matrix of this disclosure, these ratios provide for a good chemical resistance.

The total amount of alkali metal oxides $R_2O$ may be from 10.0 to 30.0% by weight. Optionally, this amount is at most 25.0% by weight, at most 22.0% by weight, at most 20.0% by weight, at most 18.0% by weight, or at most 16.0% by weight. A certain amount of alkali metal oxides may be necessary for a sufficient CSS property. Hence, a minimum amount may be 10.0% by weight, 11.0% by weight, 12.0% by weight, or even 13.0% by weight. For example, the $R_2O$

amount may range from 10.0 to 25.0% by weight, from 11.0 to 20.0% by weight, from 11.0 to 18.0% by weight, or from 12.0 to 16.0% by weight. In certain embodiments, the sum of the contents of all alkali metal oxides $R_2O$ is less than 19.5% by weight, less than 19.0% by weight, or less than 18.5% by weight.

Optionally, the ratio of (a) the sum of the contents of all alkali metal oxides $R_2O$ in weight percent to (b) the content of $SiO_2$ in weight percent is from 0.0 to <0.37 from 0.0 to <0.35, <0.30 or <0.28.

In an embodiment, the most abundant alkali metal oxide in the glass composition is $Na_2O$, the second most abundant alkali metal oxide, if present, is $K_2O$, and the third most abundant alkali metal oxide, if present, is $Li_2O$. Alternatively, the most abundant alkali metal oxide maybe $K_2O$, the second most abundant alkali metal oxide, if present, may be $Na_2O$, and the third most abundant alkali metal oxide, if present, may be $Li_2O$.

$K_2O$ may be present in the glass in amounts of up to 20.0% by weight, up to 18.0% by weight, or up to 16.0% by weight. In some embodiments, the content of $K_2O$ may be at least 10.0% by weight, or at least 12.0% by weight. In an embodiment, the glass composition comprises $K_2O$ in an amount of 3.0% by weight or less, not more than 2.8% by weight, not more than 2.5% by weight, or not more than 2.0% by weight. It may alternatively be used in proportions of at least 1.0% by weight, at least 2.0% by weight or at least 3.0% by weight.

$Na_2O$ may be present in the glass in amounts of up to 20.0% by weight, up to 18.0% by weight, or up to 16.0% by weight. In some embodiments, the content of $Na_2O$ may be at least 10.0% by weight, or at least 12.0% by weight. In an embodiment, the glass composition comprises $Na_2O$ in an amount of not more than 3.0% by weight, not more than 2.8% by weight, not more than 2.5% by weight, or not more than 2.0% by weight.

Optionally, the total amount of $Na_2O$ and/or $K_2O$ may range from 10.0 to 20.0% by weight, from 12.0 to 18.0% by weight, or from 12.0 to 16.0% by weight.

A total amount of up from 10.0 to 40.0% by weight of one or more oxides selected from ZnO, $Li_2O$, $Na_2O$, $K_2O$, MgO, CaO, SrO, BaO, and combinations thereof, may be present in the glass. In most embodiments, this total amount will be less than 30.0% by weight, less than 25.0% by weight, or less than 22.0% by weight.

The amount of ZnO in the glass may range from 0 to 5.0% by weight, from 0 to 4.0% by weight, from 0 to 3.0% by weight or from 0 to 2.0% by weight. Some embodiments contain less than 100 ppm of ZnO. In certain embodiments, the amount of ZnO may range from 0.5 to 5.0% by weight, or from 1.0 to 4.0% by weight.

The total amount of the alkali earth metal oxides plus the amount of ZnO may be 0 to 15.0% by weight, 0 to 10.0% by weight, 0 to 7.5% by weight, or 0 to 5.0% by weight.

Optionally, the amount of the alkali earth metal oxides R'O is less than 10.0% by weight, less than 6.0% by weight, less than 4.0% by weight or less than 2.0% by weight. It may alternatively be used in proportions of at least 1.0% by weight, at least 2.0% by weight or at least 3.0% by weight.

In an embodiment, the ratio of (a) the sum of the contents of all alkali earth metal oxides R'O in weight percent to (b) the content of $SiO_2$ in weight percent is from 0.00 to <0.06, from 0.0 to <0.05, <0.04, <0.03, <0.02 or <0.01. Optionally, this ratio may be >0.01, >0.02, or >0.03. For example, this ratio may be from >0.01 to <0.06, or from >0.02 to <0.05.

In some embodiments, the glass may contain MgO in amount of 0.0 to 6.0% by weight, from 0.1 to 5.0% by weight or from 0.5 to 4.0% by weight. Optionally, the amount of MgO is at least 0.1% by weight, at least 0.5% by weight, or at least 1.0% by weight.

Optionally, the sum of the contents of MgO and the second most abundant alkali metal oxide in weight percent is less than 8.0% by weight, less than 6.0% by weight or less than 4.0% by weight. In an embodiment, MgO may be used in proportions of at least 1.0% by weight, at least 2.0% by weight or at least 3.0% by weight.

An optional glass of this disclosure comprises the following components in percent by weight

| | |
|---|---|
| $SiO_2$ | 50.0 to 70.0 |
| $Al_2O_3$ | 0 to 18.0 |
| $B_2O_3$ | 0 to 12.0 |
| $P_2O_5$ | 0 to 8.0 |
| $Li_2O$ | 0 to 5.0 |
| $Na_2O+K_2O$ | 10.0 to 20.0 |
| MgO | 0 to 5.0 |
| CaO | 0 to 2.8 |
| SrO | 0 to 2.0 |
| BaO | 0 to 2.0 |

(continued)

| | |
|---|---|
| ZnO | 0 to 5.0 |
| TiO$_2$ | 0 to 3.0 |
| ZrO$_2$ | 3.0 to 14.0 |
| Y$_2$O$_3$ | 0 to 20.0 |

An optional glass of this disclosure comprises the following components in percent by weight

| | |
|---|---|
| SiO$_2$ | 50.0 to 68.0 |
| Al$_2$O$_3$ | 2.0 to 17.0 |
| B$_2$O$_3$ | 0 to 11.0 |
| P$_2$O$_5$ | 0 to 7.0 |
| Li$_2$O | 0 to 4.0 |
| Na$_2$O | 12.0 to 20.0 |
| K$_2$O | 0 to 2.8 |
| MgO | 0 to 4.5 |
| CaO | 0 to 2.5 |
| SrO | 0 to 1.0 |
| BaO | 0 to 1.0 |
| ZnO | 0 to 4.0 |
| TiO$_2$ | 0 to 2.0 |
| ZrO$_2$ | 6.0 to 14.0 |
| Y$_2$O$_3$ | 0 to 15.0 |

An optional glass of this disclosure comprises the following components in percent by weight

| | |
|---|---|
| SiO$_2$ | 50.0 to 66.0 |
| Al$_2$O$_3$ | 5.0 to 16.0 |
| B$_2$O$_3$ | 0 to 10.0 |
| P$_2$O$_5$ | 0 to 6.0 |
| Li$_2$O | 0 to 2.0 |
| Na$_2$O | 12.0 to 18.0 |
| K$_2$O | 0 to 2.5 |
| MgO | 0 to 4.0 |
| CaO | 0 to 2.5 |
| SrO | 0 to 1.0 |
| BaO | 0 to 1.0 |
| ZnO | 0 to 3.0 |
| TiO$_2$ | 0 to 1.0 |
| ZrO$_2$ | 6.5 to 13.0 |
| Y$_2$O$_3$ | 0 to 10.0 |

An optional glass of this disclosure comprises the following components in percent by weight

| SiO$_2$ | 50.0 to 64.0 |
|---|---|
| Al$_2$O$_3$ | 5.0 to 16.0 |
| B$_2$O$_3$ | 0 to 10.0 |
| P$_2$O$_5$ | 0 to 5.0 |
| Li$_2$O | < 100 ppm |
| Na$_2$O | 12.0 to 18.0 |
| K$_2$O | 0 to 2.0 |
| MgO | 0 to 3.5 |
| CaO | 0 to 2.5 |
| SrO | 0 to 1.0 |
| BaO | 0 to 1.0 |
| ZnO | 0 to 2.0 |
| TiO$_2$ | < 100 ppm |
| ZrO$_2$ | 6.5 to 13.0 |
| Y$_2$O$_3$ | 0 to 5.0 |

An optional glass of this disclosure comprises the following components in percent by weight

| SiO$_2$ | 51.0 to 70.0 |
|---|---|
| Al$_2$O$_3$ | 7.0 to 18.0 |
| B$_2$O$_3$ | 0 to 12.0 |
| P$_2$O$_5$ | 0 to 8.0 |
| Li$_2$O | 0 to 5.0 |
| Na$_2$O | 12.0 to 18.0 |
| K$_2$O | 0.0 to 3.5 |
| MgO | 0 to 5.0 |
| CaO | 0 to 2.8 |
| ZnO | 0 to 5.0 |
| TiO$_2$ | 0 to 3.0 |
| ZrO$_2$ | 7.0 to 14.0 |
| Y$_2$O$_3$ | 0 to 20.0 |

An optional glass of this disclosure comprises the following components in percent by weight

| SiO$_2$ | 51.0 to 70.0 |
|---|---|
| Al$_2$O$_3$ | 7.0 to 16.0 |
| B$_2$O$_3$ | 0 to 12.0 |
| P$_2$O$_5$ | 0 to 8.0 |
| Li$_2$O | 0 to 5.0 |
| Na$_2$O | 12.0 to 18.0 |

(continued)

| K₂O | 0.0 to 3.5 |
|---|---|
| MgO | 0 to 5.0 |
| CaO | 0 to 2.8 |
| SrO | <100 ppm |
| BaO | <100 ppm |
| ZnO | 0 to 5.0 |
| TiO₂ | 0 to 3.0 |
| ZrO₂ | 7.0 to 14.0 |
| Y₂O₃ | 0 to 20.0 |

An optional potassium and yttrium-containing glass of this disclosure comprises the following components in percent by weight

| SiO₂ | 51.0 to 70.0 |
|---|---|
| Al₂O₃ | 7.0 to 18.0 |
| B₂O₃ | 0 to 12.0 |
| P₂O₅ | 0 to 8.0 |
| Li₂O | 0 to 5.0 |
| Na₂O | 0.0 to 3.5 |
| K₂O | 12.0 to 18.0 |
| MgO | 0 to 5.0 |
| CaO | 0 to 2.8 |
| ZnO | 0 to 5.0 |
| TiO₂ | 0 to 3.0 |
| ZrO₂ | 0.0 to 14.0 |
| Y₂O₃ | 7.0 to 20.0 |

An optional potassium-containing glass of this disclosure comprises the following components in percent by weight

| SiO₂ | 51.0 to 70.0 |
|---|---|
| Al₂O₃ | 7.0 to 18.0 |
| B₂O₃ | 0 to 12.0 |
| P₂O₅ | 0 to 8.0 |
| Li₂O | 0 to 5.0 |
| Na₂O | 0.0 to 3.5 |
| K₂O | 12.0 to 18.0 |
| MgO | 0 to 5.0 |
| CaO | 0 to 2.8 |
| ZnO | 0 to 5.0 |
| TiO₂ | 0 to 3.0 |

(continued)

| | |
|---|---|
| $ZrO_2$ | 7.0 to 14.0 |
| $Y_2O_3$ | 0 to 20.0 |

An optional yttrium-containing glass of this disclosure comprises the following components in percent by weight

| | |
|---|---|
| $SiO_2$ | 51.0 to 70.0 |
| $Al_2O_3$ | 7.0 to 18.0 |
| $B_2O_3$ | 0 to 12.0 |
| $P_2O_5$ | 0 to 8.0 |
| $Li_2O$ | 0 to 5.0 |
| $Na_2O$ | 12.0 to 18.0 |
| $K_2O$ | 0.0 to 3.5 |
| MgO | 0 to 5.0 |
| CaO | 0 to 2.8 |
| ZnO | 0 to 5.0 |
| $TiO_2$ | 0 to 3.0 |
| $ZrO_2$ | 0.0 to 14.0 |
| $Y_2O_3$ | 7.0 to 20.0 |

An optional boron-containing glass of this disclosure comprises the following components in percent by weight

| | |
|---|---|
| $SiO_2$ | 51.0 to 70.0 |
| $Al_2O_3$ | 2.0 to 18.0 |
| $B_2O_3$ | 2.0 to 12.0 |
| $P_2O_5$ | 0 to 8.0 |
| $Li_2O$ | 0 to 5.0 |
| $Na_2O$ | 12.0 to 18.0 |
| $K_2O$ | 0.0 to 3.5 |
| MgO | 0 to 5.0 |
| CaO | 0 to 2.8 |
| ZnO | 0 to 5.0 |
| $TiO_2$ | 0 to 3.0 |
| $ZrO_2$ | 3.0 to 14.0 |
| $Y_2O_3$ | 0 to 20.0 |

An optional phosphorous-containing glass of this disclosure comprises the following components in percent by weight

| | |
|---|---|
| $SiO_2$ | 51.0 to 70.0 |
| $Al_2O_3$ | 7.0 to 18.0 |
| $B_2O_3$ | 0 to 12.0 |

(continued)

| | |
|---|---|
| P$_2$O$_5$ | 1.0 to 8.0 |
| Li$_2$O | 0 to 5.0 |
| Na$_2$O | 12.0 to 18.0 |
| K$_2$O | 0.0 to 3.5 |
| MgO | 0 to 5.0 |
| CaO | 0 to 2.8 |
| ZnO | 0 to 5.0 |
| TiO$_2$ | 0 to 3.0 |
| ZrO$_2$ | 3.0 to 14.0 |
| Y$_2$O$_3$ | 0 to 20.0 |

An optional magnesium-containing glass of this disclosure comprises the following components in percent by weight

| | |
|---|---|
| SiO$_2$ | 51.0 to 70.0 |
| Al$_2$O$_3$ | 7.0 to 18.0 |
| B$_2$O$_3$ | 0 to 12.0 |
| P$_2$O$_5$ | 0 to 8.0 |
| Li$_2$O | 0 to 5.0 |
| Na$_2$O | 12.0 to 18.0 |
| K$_2$O | 0.0 to 3.5 |
| MgO | 1.0 to 5.0 |
| CaO | 0 to 2.8 |
| ZnO | 0 to 5.0 |
| TiO$_2$ | 0 to 3.0 |
| ZrO$_2$ | 3.0 to 14.0 |
| Y$_2$O$_3$ | 0 to 20.0 |

An optional phosphorous and zinc-containing glass of this disclosure comprises the following components in percent by weight

| | |
|---|---|
| SiO$_2$ | 51.0 to 70.0 |
| Al$_2$O$_3$ | 7.0 to 18.0 |
| B$_2$O$_3$ | 0 to 12.0 |
| P$_2$O$_5$ | 1.0 to 8.0 |
| Li$_2$O | 0 to 5.0 |
| Na$_2$O | 12.0 to 18.0 |
| K$_2$O | 0.0 to 3.5 |
| MgO | 0 to 5.0 |
| CaO | 0 to 2.8 |
| ZnO | 1.0 to 5.0 |

(continued)

| | |
|---|---|
| TiO$_2$ | 0 to 3.0 |
| ZrO$_2$ | 3.0 to 14.0 |
| Y$_2$O$_3$ | 0 to 20.0 |

An optional zinc-containing glass of this disclosure comprises the following components in percent by weight

| | |
|---|---|
| SiO$_2$ | 51.0 to 70.0 |
| Al$_2$O$_3$ | 7.0 to 18.0 |
| B$_2$O$_3$ | 0 to 12.0 |
| P$_2$O$_5$ | 0 to 8.0 |
| Li$_2$O | 0 to 5.0 |
| Na$_2$O | 12.0 to 18.0 |
| K$_2$O | 0.0 to 3.5 |
| MgO | 0 to 5.0 |
| CaO | 0 to 2.8 |
| ZnO | 1.0 to 5.0 |
| TiO$_2$ | 0 to 3.0 |
| ZrO$_2$ | 3.0 to 14.0 |
| Y$_2$O$_3$ | 0 to 20.0 |

The glass may comprise one or more fining agents, such as CeO$_2$, SnO$_2$, Cl, SO$_3$. It is desirable to avoid the toxic fining agents arsenic and antimony, so that the sum of the amounts of arsenic and antimony may be less than 100 ppm. Due to toxicity concerns, the sum of the amounts of lead and bismuth may be less than 100 ppm. In embodiments, the glass may contain F in amounts of less than 1% by weight.

Parameters

A coefficient of thermal expansion of the glass may be less than 8.8*10$^{-6}$ K$^{-1}$, less than 8.5*10$^{-6}$ K$^{-1}$ or less than 8.2*10$^{-6}$ K$^{-1}$. In exceptional embodiments the coefficient of thermal expansion is up to 9.2 *10$^{-6}$ K$^{-1}$. Optionally, the coefficient of thermal expansion is at least 6.0*10$^{-6}$ K$^{-1}$, at least 7.0*10$^{-6}$ K$^{-1}$ or at least 7.2*10$^{-6}$ K$^{-1}$. In embodiments, the coefficient of thermal expansion of the glass ranges from 6.0*10$^{-6}$ K$^{-1}$ to 9.2*10$^{-6}$ K$^{-1}$, from 7.0*10$^{-6}$ K$^{-1}$ to 8.8*10$^{-6}$ K$^{-1}$ or from 7.2*10$^{-6}$ K$^{-1}$ to 8.2*10$^{-6}$ K$^{-1}$. In certain embodiments, the coefficient of thermal expansion is less than 8.0*10$^{-6}$ K$^{-1}$ or even less than 7.9*10$^{-6}$ K$^{-1}$.

The glass may have a Young's modulus of at least 70 GPa, at least 74 GPa, at least 75 GPa, or at least 78 GPa. Optionally, the Young's modulus is up to 90 GPa, up to 88 GPa or up to 86 GPa. In embodiments, the Young's modulus of the glass ranges from 70 GPa to 90 GPa, from 74 GPa to 88 GPa or from 75 GPa to 86 GPa. In certain embodiments, the Young's modulus is at least 80 GPa or even at least 82 GPa.

In an embodiment, the glass has a Poisson's ratio of from 0.220 to 0.260, from 0.225 to 0.255, of from 0.230 to 0.250. Optionally, Poisson's ratio may be less than 0.260, less than 0.255 or less than 0.250. In embodiments, Poisson's ratio is at least 0.220, at least 0.225 or at least 0.230.

Optionally, the glass has a density of from 2.530 to 2.800 g/cm$^3$, from 2.580 to 2.700 g/cm$^3$, or from 2.600 to 2.690 g/cm$^3$. The density may be at least 2.530 g/cm$^3$, at least 2.580 g/cm$^3$ or at least 2.600 g/cm$^3$. In embodiments, the density will be up to 2.800 g/cm$^3$, up to 2.700 g/cm$^3$, up to 2.690 g/cm$^3$ or up to 2.680 g/cm$^3$.

In an embodiment, the glass may have a glass transition temperature $T_g$ of at least 590°C, at least 610°C or at least 625°C. In certain embodiments, $T_g$ may even be at least 655°C or at least 665°C, whereas particular embodiments may even have $T_g$ values above 710°C. Optionally, $T_g$ may be less than 860°C, or less than 810°C. In embodiments, $T_g$ ranges from 590°C to 860°C, from 610°C to 860°C, or from 625°C to 810°C. A high $T_g$ allows for high temperatures during ion exchange treatment. Glasses with high $T_g$ will relax stresses induced by ion exchange at higher temperatures less than glasses with lower $T_g$. Higher temperatures accelerate ion exchange processes so that ion exchange becomes more economical.

In an embodiment, the glass may have a strain point of at least 580°C, at least 600°C or at least 615°C. In certain embodiments, the strain point may even be at least 645°C or at least 655°C, whereas particular embodiments may even have strain point values above 700°C. Optionally, the strain point may be less than 850°C, or less than 800°C. In embodiments, the strain point ranges from 580°C to 850°C, from 600°C to 850°C, or from 615°C to 800°C. A high strain point allows for high temperatures during ion exchange treatment. Glasses with high strain point will relax stresses induced by ion exchange at higher temperatures less than glasses with lower strain point. Higher temperatures accelerate ion exchange processes so that ion exchange becomes more economical.

Optionally, the glass composition exhibits one or more of

- a temperature $T_4$ of at least 1190°C, at least 1200°C or at least 1250°C,

- a temperature $T_3$ of at least 1350°C, at least 1400°C or at least 1450°C,

- a VFT constant A of <0.00, optionally from -4.00 to -2.00,

- a VFT constant B of >5,000°C, optionally from 6,000°C to 8,000°C, and

- a VFT constant $T_0$ of 150 to 550°C, such as from 200 to 400°C, or up to 355°C.

The glass of this disclosure may have remarkable steepness of the temperature viscosity curve. Steepness of the curve may be quantified as the difference between the temperatures $T_4$ and $T_{7.6}$. For the glass of this disclosure this difference may be at least 250 K, at least 265 K, at least 280 K, or at least 300 K. Optionally, this value does not exceed 400 K, 380 K, or 360 K. For example, the difference between the temperatures $T_4$ and $T_{7.6}$ may range from 250 to 400 K, from 265 to 380 K, or from 280 to 360 K.

All of these parameters describe the viscosity behavior of the glass. The glass of this disclosure has rather high characteristic temperatures, making it possible to use high temperatures during ion exchange, thereby accelerating the ion exchange process.

An important property of the glass of this disclosure is its ability to build high compressive stress in very short time. The property is quantified by a CSS score - or just "CSS" - which is equivalent to the compressive stress formed in a test specimen. The further used index indicates the glass thickness used for measuring CSS. The glass compositions of this disclosure have remarkable CSS values at small glass thicknesses.

Optionally, the glass of this disclosure has a $CSS_{200\mu m}$ of at least 800 MPa, at least 900 MPa, at least 1000 MPa, at least 1150 MPa, or even at least 1250 MPa. This is a very remarkable compressive stress susceptibility, which allows for introduction of very high compressive stresses into the glass within short time. Optionally, $CSS_{200\mu m}$ ranges up to 1800 MPa, up to 1600 MPa, or up to 1500 MPa. In embodiments, $CSS_{200\mu m}$ ranges from 800 MPa to 1800 MPa, from 900 MPa to 1600 MPa, or from 1000 MPa to 1500 MPa. Prior art glass compositions reach such high compressive stresses only after much longer ion exchange times. Often, prior art glass composition will reach compressive stresses of 1000 MPa only after more than 4 hours of ion exchange or not at all.

Optionally, the glass of this disclosure has a $CSS_{30\mu m}$ of at least 600 MPa, at least 700 MPa, at least 800 MPa, at least 850 MPa, or even at least 900 MPa. Optionally, $CSS_{30\mu m}$ ranges up to 1200 MPa, up to 1100 MPa, or up to 1000 MPa. In embodiments, $CSS_{30\mu m}$ ranges from 600 MPa to 1200 MPa, from 700 MPa to 1100 MPa, or from 800 MPa to 1000 MPa. In an embodiment, the $CSS_{30\mu m}$ score refers to the $CSS_{30\mu m}$. Prior art glass compositions do not reach such high compressive stresses at such small thicknesses.

Another way of expressing the remarkable property of this glass to accept compressive stress is the 1000 MPa IOX-time, i.e. the duration of ion exchange treatment in an alkali nitrate bath needed for the glass specimen to reach 1000 MPa of compressive stress at its surface. Optionally, the 1000 MPa IOX-time of the glass of this disclosure is less than 60 minutes, less than 30 minutes or even less than 20 minutes. In an embodiment, the 1000 MPa IOX-time refers to the IOX-time in a potassium nitrate bath.

The remarkable ability of this glass to be chemically strengthened is further illustrated with reference to its diffusivity. A high diffusivity means that the glass can receive a compressive stress layer of sufficient depth within a short time, making the production process of the glass more economical. In certain embodiments, the glass of this disclosure has a diffusivity of at least 10 $\mu m^2/h$, 14 $\mu m^2/h$, 18 $\mu m^2/h$, 25 $\mu m^2/h$, 35 $\mu m^2/h$. Optionally, this value may range up to 80 $\mu m^2/h$, 70 $\mu m^2/h$, or 60 $\mu m^2/h$. In certain embodiments, diffusivity is from 10 to 80 $\mu m^2/h$, from 14 to 70 $\mu m^2/h$, or from 18 to 60 $\mu m^2/h$.

The glass of this disclosure may have a chemical resistance characterized by one or more of

(a) a hydrolytic resistance value in $\mu$g/g sodium equivalent of less than 100, less than 60, less than 40, or less than 30;

(b) an alkali resistance value in mg/dm$^2$ weight loss of less than 50, less than 40, less than 30, or less than 20;

(c) an acid resistance value in mg/dm$^2$ weight loss of less than 30, less than 20, less than 15 less than 10, or less than 5.

Optionally, a hydrolytic resistance value in $\mu$g/g sodium equivalent may be at least 1, at least 5, or at least 10. In an embodiment, an alkali resistance value in mg/dm$^2$ weight loss of is at least 1, at least 5, or at least 8. Further, an acid resistance value in mg/dm$^2$ weight loss of may be at least 1, at least 2, or at least 3.

Glasses of this disclosure exhibit remarkable compressive stress susceptibility in MPa relative to the total content of alkali metal oxides R$_2$O and alkali earth metal oxides R'O in weight percent $\dfrac{CSS_{200\mu m}}{[R_2O]+[R'O]}$. Prior art glasses need very high amounts of alkali metal oxides or alkali earth metal oxides in order to achieve compressive stress during ion exchange. To the contrary, the compositions described herein build high compressive stress even with moderate proportions of alkali metals and alkali earth metals. Optionally, $\dfrac{CSS_{200\mu m}}{[R_2O]+[R'O]}$ is at least 35, at least 50, at least 60, at least 80 or at least 90. In some embodiments, $\dfrac{CSS_{200\mu m}}{[R_2O]+[R'O]}$ is at least 100, at least 120, or at least 140. Optionally, $\dfrac{CSS_{200\mu m}}{[R_2O]+[R'O]}$ range up to 250, up to 200, or up to 150. In some embodiments, $\dfrac{CSS_{200\mu m}}{[R_2O]+[R'O]}$ is from 50 to 250, from 60 to 200, or from 60 to 150. The unit of this parameter (MPa/wt.%) is not indicated for reasons of legibility.

In an embodiment, this disclosure relates to a glass having a CSS$_{200\mu m}$ in MPa relative to the co-efficient of thermal expansion in a temperature range of from 20 to 300°C in ppm/K $\dfrac{CSS_{200\mu m}}{CTE}$ of at least 85, at least 100, at least 110, at least 120 or at least 130. Prior art glass compositions have the drawback of high thermal expansion, often above 9.0*10$^{-6}$ K$^{-1}$. The glass compositions of this disclosure provide for high CSS$_{200\mu m}$ at low CTE, e.g. having a $\dfrac{CSS_{200\mu m}}{CTE}$ from 100 to 250, from 110 to 220 or from 120 to 200. For example, $\dfrac{CSS}{CTE}$ may range up to 250, up to 220 or up to 200. The unit of this parameter (MPa*K/ppm) is not indicated for reasons of legibility.

The refractive index of a glass used for displays should not be too high in order to provide for limited reflectance. Optionally, the refractive index $n_d$ of the glass of this disclosure is less than 1.600, less than 1.550, or even less than 1.540. In certain embodiments, the refractive index ranges from 1.520 to 1.600, or from 1.530 to 1.550.

Toughenable article

A glass article of this disclosure may have a thickness of 1,000 $\mu$m or less and comprise or consist of a glass as described herein. Generally, the article may be referred to as a thin glass article, or a glass sheet. It may have a thickness of less than 850 $\mu$m, less than 500 $\mu$m, less than 300 $\mu$m, less than 200 $\mu$m, or less than 100 $\mu$m. In some embodiments, the thickness may be as low as 80 $\mu$m or less, or 70 $\mu$m or less. Some articles have thicknesses of 50 $\mu$m or less, or 40 $\mu$m or less. Such thin glass articles have the property of being bendable and/or foldable. For such a flexible or foldable cover glass the desired thickness may be less than 100 $\mu$m, less than 80 $\mu$m, less than 60 $\mu$m, or less than 40 $\mu$m. In order for the article to be sufficiently impact resistant, a minimum thickness may be required. The minimum thickness may be at least 5 $\mu$m, at least 10 $\mu$m or at least 15 $\mu$m.

Owing to the remarkable property of having a low CTE and other desirable features, the glass article can be manufactured having a warp of less than 3.0 mm, less than 2.0 mm, or less than 1.0 mm. Generally, the glass article may be manufactured in a drawing process, wherein temperature differences between different portions of the glass will cause warp. Because the glass of this disclosure has a small CTE and other desirable properties, such as a good viscosity characteristic, articles with low warp may be obtained. In certain embodiments, warp is at least 5 $\mu$m, at least 10 $\mu$m, at least 100 $\mu$m, or at least 250 $\mu$m.

Optionally, the article may have a total thickness variation of less than 15 $\mu$m, less than 10 $\mu$m, less than 7

μm, or less than 5 μm. In embodiments, TTV may reach from 1 μm to 10 μm. In an embodiment, TTV is the thickness of a glass article ±10%, ±5%, or ±3%.

The article may have an area of at least 10 cm², at least 15 cm², or at least 20 cm². In embodiments, the article may have an area of less than 10,000 cm², less than 1,000 cm², or less than 200 cm².

The article may have, on one or both of its major surfaces, a surface roughness $R_a$ of not more than 5.0 nm, not more than 3.0 nm or not more than 1.5 nm. Such very small roughness is obtainable in a down-draw process.

The article may have, on one or both of its major surfaces, a remarkable chemical resistance. The chemical resistance may characterized as one or more of

(a) a hydrolytic resistance value in μg/g sodium equivalent of less than 100, less than 60, less than 40, or less than 30;

(b) an alkali resistance value in mg/dm² weight loss of less than 50, less than 40, less than 30, or less than 20;

(c) an acid resistance value in mg/dm² weight loss of less than 30, less than 20, less than 15, less than 10, or less than 5.

The glass article may have a Vickers hardness of at least 580, at least 590 or at least 600. Optionally, Vickers hardness ranges from 580 to 800, from 590 to 700, or from 600 to 630.

In an embodiment, the glass article has excellent three-point bending strength, exhibiting a three-point bending strength of at least 100 MPa, at least 200 MPa or at least 300 MPa. It is remarkable that such a strength can be achieved even without ion exchange strengthening. With such high strength to start with, the strength of the article after ion exchange is even more remarkable. Optionally, the three-point bending strength may range from 100 MPa to 600 MPa, from 200 MPa to 500 MPa, or from 300 MPa to 400 MPa.

Toughened article

The glass article may comprise an ion-exchanged layer on one or both of its major surfaces. An ion exchange layer imparts high strength to the glass article. Optionally, the article may have, on one or both of its major surfaces, a compressive stress of at least 400 MPa, at least 700 MPa, at least 800 MPa, or at least 900 MPa. In embodiments, the compressive stress may range up to 1800 MPa, up to 1600 MPa, up to 1500 MPa, or up to 1400 MPa. For example, compressive stress may range from 400 MPa to 1800 MPa, from 700 MPa to 1600 MPa, or from 800 MPa to 1400 MPa.

In an embodiment, the glass article has a thickness of 20 to 40 μm, such as 25 to 35 μm and has a compressive stress on one or both of its major surfaces of at least 800 MPa, at least 850 MPa, or at least 900 MPa.

Optionally, the glass article exhibits a DoL on one or both of its major surfaces of from 6 to 12 μm, or from 7 to 11 μm. For example, DoL may be at least 6 μm, at least 7 μm, or at least 8 μm. Alternatively or additionally, DoL may range up to 15 μm, up to 13 μm, up to 12 μm, or up to 11 μm.

In an embodiment, DoL is from 15 to 25% of the article thickness, or from 16 to 20% of the article thickness. In embodiments, DoL is at least 15% of the article thickness, at least 16%, or at least 17% of the article thickness. DoL may be up to 33%, up to 25%, or up to 20% of the article thickness. In this context, DoL refers to the depth of one compressive stress layer. The total DoL of all compressive stress layers may be larger.

One of the astonishing properties of the article of this disclosure is that very high compressive stress can be achieved even in thin articles. In embodiments, the glass article has, on one or both of its major surfaces, a ratio of compressive stress in MPa to article thickness in μm of at least 4.0, at least 5.0, at least 6.0 or at least 10.0. In embodiments, this value may reach up to 40.0, up to 35.0, or up to 30.0. Optionally, the ratio of compressive stress in MPa to article thickness in μm is up to 10.0, up to 8.0, or up to 7.0. In certain embodiments, the ratio of compressive stress in MPa to article thickness in μm ranges from 4.0 to 40.0, from 5.0 to 35.0, from 5.0 to 30.0 or from 10.0 to 29.0. In a particular embodiment, this value ranges from 20.0 to 30.0. In an embodiment, the ratio of compressive stress in MPa to article thickness is at least 20.0, or at least 25.0.

Optionally, the article may have, on one or both of its major surfaces, a ratio of compressive stress in MPa to depth of ion exchanged layer in μm of at least 50, at least 75, or at least 90. In an embodiment, this value is even at least 100, at least 120 or at least 140. For example, the ratio of compressive stress in MPa to depth of ion exchanged layer in μm may range from 50 to 400, from 75 to 300, or from 90 to 200. In certain embodiments, the ratio of compressive stress in MPa to depth of ion exchanged layer in μm is up to 400, up to 300 or up to 200.

In an embodiment, this disclosure relates to a glass article exhibiting a three-point bending strength of at least 400 MPa, at least 500 MPa or at least 600 MPa.

In an embodiment, the glass article has excellent three-point bending strength, exhibiting a three-point bending strength of at least 400 MPa, at least 500 MPa or at least 600 MPa. It is remarkable that such a strength can be achieved. Optionally, the three-point bending strength may range from 400 MPa to 1200 MPa, from 500 MPa to 1000 MPa, or from 600 MPa to 800 MPa.

Electronic device

The glass and/or the glass article may be used in an electronic device, such as a portable computer, smartphone, tablet computer and other handheld or wearable devices. The glass and/or glass article may be part of a display.

Thus, an electronic device according to this disclosure may comprise a glass or glass article according to this disclosure. The electronic device may comprise a display, wherein the display comprises the glass and/or glass article of this disclosure. The glass article may be a cover glass of the electronic device.

The electronic device may be a flexible and/or foldable device, such as a flexible and/or foldable smartphone or tablet computer.

Method of making

The glass may be produced by melting a batch of raw materials suitable for obtaining the compositions of this disclosure. For example, the glass may be melted in a platinum crucible. After melting, the glass melt may be fined using one or more fining agents to remove bubbles. Instead of using chemical fining agents, physical fining methods such as vacuum fining can be used.

In an industrial scale, glass articles may be prepared by float or down-draw processes such as slot down-draw or overflow down draw methods. Slot down-draw is preferred because it allows for very small thickness.

After forming, the article may be strengthened by ion exchange (also called "chemical strengthening"). Strengthening may include immersing the article in a bath of molten salt. The salt is selected based on the desired ion exchange process. In preferred embodiments, the salt will be an alkali salt, such as an alkali nitrate. In certain embodiments, the salt bath contains potassium nitrate, optionally, about 100% $KNO_3$.

Chemically strengthening a glass article by ion exchange is well known to the skilled person. The strengthening process may be done by immersing the glass article into a salt bath which contains monovalent ions to exchange with alkali ions inside the glass. The monovalent ions in the salt bath have larger radii than alkali ions inside the glass, e.g. $Na^+$, $K^+$, and/or $Cs^+$. A compressive stress to the glass is built up after ion exchange due to larger ions squeezing into the glass network. After ion exchange, the strength of glass is significantly improved. In addition, the CS induced by chemical strengthening improves the bending properties of the toughened glass article and increases scratch resistance of the glass article. The typical salt used for chemical strengthening is, for example, $K^+$-containing molten salt or mixtures of salts. Optional salt baths for chemical toughening are $Na^+$-containing and/or $K^+$-containing molten salt baths or mixtures thereof. Optional salts are $NaNO_3$, $KNO_3$, $CsNO_3$, $NaCl$, $KCl$, $CsCl$, $Na_2SO_4$, $K_2SO_4$, $CS_2SO_4$, $Na_2CO_3$, $K_2CO_3$, $Cs_2CO_3$, and $K_2Si_2O_5$. Additives such as $NaOH$, $KOH$ and other sodium salts or potassium salts are also used to better control the rate of ion exchange for chemical strengthening. Ion exchange may for example be done in $KNO_3$ at temperatures in a range of from 300°C to 480°C or from 340°C to 480°C, in particular from 340°C to 450°C or from

390°C to 450°C. Chemical strengthening is not limited to a single step. It can include multi steps in one or more salt baths with alkaline metal ions of various concentrations and/or different ions in the salt baths to reach better toughening performance. Thus, the chemically toughened glass article can be toughened in one step or in the course of several steps, e.g. two steps. Two-step chemical toughening is in particular applied to $Li_2O$-containing glasses as lithium may be ex-changed for both sodium and potassium ions.

The inventors found that the glass exhibits a very fast ion exchange and achieves high compressive stress within short times. The time during which the article is immersed within the molten salt bath at the indicated temperatures may range from 20 minutes to 12 hours, from 25 minutes to 4 hours, or from 30 minutes to 2 hours. Optionally, the time is at least 20 minutes, at least 25 minutes, or at least 30 minutes. In embodiments, the ion exchange time is not more than 2 hours, or not more than 1 hour.

Optionally, during ion exchange the temperature of the salt bath will be in a temperature range of from $T_g$-400 to $T_g$-100°C, or from $T_g$-250 to $T_g$-150°C.

In an embodiment, the method includes:

- melting a batch of raw materials as needed to obtain a glass according to this disclosure,

- forming a glass article, such as a glass article as described herein,

- strengthening the article by ion-exchange treatment in an ion exchange bath.

Items of this disclosure

Each of the following items represents specific embodiments of glasses, glass articles, and other aspects of this disclosure, as described in detail hereinabove.

A first item relates to a glass comprising

    i. $SiO_2$,

    ii. $Al_2O_3$ and/or $B_2O_3$ in a total amount of 5.0 to 25.0% by weight,

    ii. $ZrO_2$ and/or $Y_2O_3$ in a total amount of at least 3.0% by weight,

    iii. a total amount of up from 10.0 to 40.0% by weight of one or more oxides selected from ZnO, $Li_2O$, $Na_2O$, $K_2O$, MgO, CaO, SrO, BaO, and combinations thereof, and

    iv. optionally one or more components selected from $P_2O_5$ and $TiO_2$.

A second item relates to a glass of the first item having a coefficient of thermal expansion in a temperature range of from 20 to 300°C of less than $9.2*10^{-6}$ $K^{-1}$, less than $8.8*10^{-6}$ $K^{-1}$, less than $8.5*10^{-6}$ $K^{-1}$ or less than $8.2*10^{-6}$ $K^{-1}$.

A third item relates to a glass of the first or second item, having a Young's modulus of at least 70 GPa, at least 74 GPa, at least 75 GPa, or at least 78 GPa.

A fourth item relates to a glass of at least one of the first to third items, having a Poisson's ratio of from 0.220 to 0.260, from 0.225 to 0.255, of from 0.230 to 0.250.

A fifth item relates to a glass of at least one of the first to fourth items, having a 1000 MPa IOX-time of less than 60 minutes.

A sixth item relates to a glass of at least one of the first to fifth items, having a density of from 2.530 to 2.800 $g/cm^3$, from 2.580 to 2.700 $g/cm^3$, or from 2.600 to 2.690 $g/cm^3$.

A seventh item relates to a glass of at least one of the first to sixth items, having a glass transition temperature $T_g$ of at least 590°C, at least 610°C or at least 625°C.

An eighth item relates to a glass of at least one of the first to seventh items, having a compressive stress susceptibility defined as a $CSS_{200\mu m}$ score of at least 800 MPa, optionally in a 100% $KNO_3$ bath.

A ninth item relates to a glass of at least one of the first to eighth items, having a chemical resistance characterized by one or more of

    (a) a hydrolytic resistance value in $\mu g/g$ sodium equivalent of less than 100, less than 60, less than 40, or less than 30;

    (b) an alkali resistance value in $mg/dm^2$ weight loss of less than 50, less than 40, less than 30, or less than 20;

    (c) an acid resistance value in $mg/dm^2$ weight loss of less than 30, less than 20, less than 15, less than 10, or less than 5.

A tenth item relates to a glass of at least one of the first to ninth items, having a compressive stress susceptibility in MPa relative to the total content of alkali metal oxides $R_2O$ and alkali earth metal oxides R'O in weight percent

$$\frac{CSS_{200\mu m}}{[R_2O]+[R'O]}$$ of at least 35, at least 50, at least 60 or at least 80.

An eleventh item relates to a glass of at least one of the first to tenth items, having a compressive stress susceptibility in MPa relative to the coefficient of thermal expansion in a temperature range of from 20 to 300°C in ppm/K

$$\frac{CSS_{200\mu m}}{CTE}$$ of at least 85, at least 100, at least 110 or at least 120.

A twelfth item relates to a glass of at least one of the first to eleventh items, having a total amount of alkali metal oxides, alkali earth metal oxides and ZnO of not more than 27.0% by weight.

A thirteenth item relates to a glass of at least one of the first to twelfth items, wherein a ratio of a second most abundant alkali metal oxide B, and a most abundant alkali metal oxide A in weight percent is less than 0.23, less than 0.22, or less than 0.18.

A fourteenth item relates to a glass of the thirteenth item, wherein A = $Na_2O$ and B = $K_2O$, or B = $Na_2O$ and A = $K_2O$.

A fifteenth item relates to a glass of at least one of the first to fourteenth items, having a ratio of the weight

amount of K$_2$O relative to the sum of the weight amounts of Li$_2$O and Na$_2$O of less than 0.23, less than 0.22, or less than 0.18.

A sixteenth item relates to a glass of at least one of the first to fourteenth items, having a ratio of the weight amount of Na$_2$O relative to the sum of the weight amounts of Li$_2$O and K$_2$O of less than 0.23, less than 0.22, or less than 0.18.

A seventeenth item relates to a glass of at least one of the first to sixteenth items, having a ratio of the weight amount of SiO$_2$ relative to the sum of the weight amounts of Li$_2$O and Na$_2$O of less than 5.5, less than 4.9, or less than 4.5.

An eighteenth item relates to a glass of at least one of the first to seventeenth items, comprising

- SiO$_2$ in an amount of at least 50.0% by weight or at least 55.0% by weight, and/or
  K$_2$O in an amount of less than 3.0% by weight.

A nineteenth item relates to a glass of at least one of the first to eighteenth items, wherein the sum of the contents of Al$_2$O$_3$ and B$_2$O$_3$ is less than 20.5% by weight, less than 18.0% by weight, or less than 17.0% by weight.

A twentieth item relates to a glass of at least one of the first to nineteenth items, wherein the sum of the contents of Al$_2$O$_3$ and B$_2$O$_3$ is at least 5.0% by weight, at least 7.0% by weight, at least 8.5% by weight, or at least 10.5% by weight.

A twenty-first item relates to a glass of at least one of the first to twentieth items, wherein the sum of the contents of all alkali metal oxides R$_2$O is less than 20.5% by weight, less than 19.5% by weight, or less than 18.5% by weight.

A twenty-second item relates to a glass of at least one of the first to twenty-first items, wherein the ratio of (a) the content of the second most abundant alkali metal oxide in weight percent to (b) the sum of the contents of Al$_2$O$_3$ and B$_2$O$_3$ in weight percent from 0.0 to 0.4, from 0.0 to 0.3 or from 0.0 to 0.2.

A twenty-third item relates to a glass of at least one of the first to twenty-second items, wherein the sum of the contents of MgO and the second most abundant alkali metal oxide in weight percent is less than 8.0% by weight, less than 6.0% by weight or less than 4.0% by weight.

A twenty-fourth item relates to a glass of at least one of the first to twenty-third items, wherein the glass comprises the following components in percent by weight

| | |
|---|---|
| SiO$_2$ | 50.0 to 70.0 |
| Al$_2$O$_3$ | 0 to 18.0 |
| B$_2$O$_3$ | 0 to 12.0 |
| P$_2$O$_5$ | 0 to 8.0 |
| TiO$_2$ | 0 to 3.0 |
| ZrO$_2$ | 3.0 to 14.0 |
| ZnO | 0 to 5.0 |
| Y$_2$O$_3$ | 0 to 20.0 |
| R$_2$O | 10.0 to 30.0 |
| R'O + ZnO | 0 to 15.0 |

wherein R$_2$O is the sum of the amounts of the alkali metal oxides and R'O is the sum of the amounts of all alkali earth metal oxides.

A twenty-fifth item relates to a glass of at least one of the first to twenty-fourth items, wherein the glass comprises the following components in percent by weight

| | |
|---|---|
| SiO$_2$ | 50.0 to 70.0 |
| Al$_2$O$_3$ | 0 to 18.0 |
| B$_2$O$_3$ | 0 to 12.0 |
| P$_2$O$_5$ | 0 to 8.0 |
| Li$_2$O | 0 to 5.0 |
| Na$_2$O+K$_2$O | 10.0 to 20.0 |
| MgO | 0 to 5.0 |

(continued)

| | |
|---|---|
| CaO | 0 to 2.8 |
| SrO | 0 to 2.0 |
| BaO | 0 to 2.0 |
| ZnO | 0 to 5.0 |
| $TiO_2$ | 0 to 3.0 |
| $ZrO_2$ | 3.0 to 14.0 |
| $Y_2O_3$ | 0 to 20.0 |

A twenty-sixth item relates to a glass of at least one of the first to twenty-fourth items, wherein the glass comprises the following components in percent by weight

| | |
|---|---|
| $SiO_2$ | 50.0 to 68.0 |
| $Al_2O_3$ | 2.0 to 17.0 |
| $B_2O_3$ | 0 to 11.0 |
| $P_2O_5$ | 0 to 7.0 |
| $Li_2O$ | 0 to 4.0 |
| $Na_2O$ | 12.0 to 20.0 |
| $K_2O$ | 0 to 2.8 |
| MgO | 0 to 4.5 |
| CaO | 0 to 2.5 |
| SrO | 0 to 1.0 |
| BaO | 0 to 1.0 |
| ZnO | 0 to 4.0 |
| $TiO_2$ | 0 to 2.0 |
| $ZrO_2$ | 6.0 to 14.0 |
| $Y_2O_3$ | 0 to 15.0 |

A twenty-seventh item relates to a glass of at least one of the first to twenty-fourth items, wherein the glass comprises the following components in percent by weight

| | |
|---|---|
| $SiO_2$ | 50.0 to 66.0 |
| $Al_2O_3$ | 5.0 to 16.0 |
| $B_2O_3$ | 0 to 10.0 |
| $P_2O_5$ | 0 to 6.0 |
| $Li_2O$ | 0 to 2.0 |
| $Na_2O$ | 12.0 to 18.0 |
| $K_2O$ | 0 to 2.5 |
| MgO | 0 to 4.0 |
| CaO | 0 to 2.5 |
| SrO | 0 to 1.0 |
| BaO | 0 to 1.0 |

(continued)

| | |
|---|---|
| ZnO | 0 to 3.0 |
| $TiO_2$ | 0 to 1.0 |
| $ZrO_2$ | 6.5 to 13.0 |
| $Y_2O_3$ | 0 to 10.0 |

A twenty-eighth item relates to a glass of at least one of the first to twenty-fourth items, wherein the glass comprises the following components in percent by weight

| | |
|---|---|
| $SiO_2$ | 50.0 to 64.0 |
| $Al_2O_3$ | 5.0 to 16.0 |
| $B_2O_3$ | 0 to 10.0 |
| $P_2O_5$ | 0 to 5.0 |
| $Li_2O$ | < 100 ppm |
| $Na_2O$ | 12.0 to 18.0 |
| $K_2O$ | 0 to 2.0 |
| MgO | 0 to 3.5 |
| CaO | 0 to 2.5 |
| SrO | 0 to 1.0 |
| BaO | 0 to 1.0 |
| ZnO | 0 to 2.0 |
| $TiO_2$ | < 100 ppm |
| $ZrO_2$ | 6.5 to 13.0 |
| $Y_2O_3$ | 0 to 5.0 |

A twenty-ninth item relates to a glass of at least one of the first to twenty-eighth items, wherein the amount of $ZrO_2$ is at least 4.5% by weight, at least 5.1% by weight, or at least 6.0% by weight.

A thirtieth item relates to a glass of at least one of the first to twenty-ninth items, wherein the sum of the amounts of arsenic and antimony is less than 100 ppm.

A thirty-first item relates to a glass of at least one of the first to thirtieth items, wherein the sum of the amounts of lead and bismuth is less than 100 ppm.

A thirty-second item relates to a glass of at least one of the first to thirty-first items, wherein

(A) the most abundant alkali metal oxide is $Na_2O$, the second most abundant alkali metal oxide, if present, is $K_2O$, and the third most abundant alkali metal oxide, if present, is $Li_2O$; or

(B) the most abundant alkali metal oxide is $K_2O$, the second most abundant alkali metal oxide, if present, is $Na_2O$, and the third most abundant alkali metal oxide, if present, is $Li_2O$.

A thirty-third item relates to a glass of at least one of the first to thirty-second items, wherein the amount of the alkali earth metal oxides R'O is less than 10.0% by weight, less than 6.0% by weight, less than 4.0% by weight or less than 2.0% by weight.

A thirty-fourth item relates to a glass of at least one of the first to thirty-third items, wherein glass composition exhibits one or more of

• a temperature $T_4$ of at least 1190°C, at least 1200°C or at least 1250°C,

• a temperature $T_3$ of at least 1350°C, at least 1400°C or at least 1450°C,

- a VFT constant A of <0.00, optionally from -4.00 to -2.00,

- a VFT constant B of >5,000°C, optionally from 6,000°C to 8,000°C, and

- a VFT constant $T_0$ of 150 to 550°C, such as from 200 to 400°C, or up to 355°C.

A thirty-fifth item relates to a glass of at least one of the first to thirty-fourth items, wherein the ratio of (a) the sum of the contents of all alkali earth metal oxides R'O in weight percent to (b) the content of $SiO_2$ in weight percent is from 0.0 to <0.06, <0.05, <0.04, <0.03, <0.02 or <0.01.

A thirty-sixth item relates to a glass of at least one of the first to thirty-fifth items, wherein the ratio of (a) the sum of the contents of all alkali metal oxides $R_2O$ in weight percent to (b) the content of $SiO_2$ in weight percent is from 0.0 to <0.37, <0.35, <0.30 or <0.28.

A thirty-seventh item relates to a glass of at least one of the first to thirty-sixth items, wherein the ratio of (a) the sum of the contents of $ZrO_2$ and $Y_2O_3$ in weight percent to (b) the content of $SiO_2$ in weight percent is from 0.08 to 0.40, from 0.10 to 0.35 or from 0.19 to 0.25.

A thirty-eighth item relates to a glass of at least one of the first to thirty-seventh items, wherein the ratio of (a) the sum of the contents of $ZrO_2$ and $Y_2O_3$ in weight percent to (b) the sum of the contents of $Al_2O_3$ and $B_2O_3$ in weight percent is from 0.30 to 2.00, from 0.35 to 1.80 or from 0.65 to 1.25.

A thirty-ninth item relates to a glass of at least one of the first to thirty-eighth items, wherein the sum of the contents of $Al_2O_3$ and $ZrO_2$ in weight percent is from 10.0 to 30.0, 15.0 to 28.0 or 22.0 to 26.0.

A fortieth item relates to a glass of at least one of the first to thirty-ninth items, the glass having a steepness of its temperature-viscosity curve characterized by a difference between its temperatures $T_4$ and $T_{7.6}$ of from 250 to 400 K, from 265 to 380 K, or from 280 to 360 K.

A forty-first item relates to a glass of at least one of the first to fortieth items, the glass having an amount of $ZrO_2$ is at least 6.8% by weight, or at least 7.5% by weight.

A forty-second item relates to a glass of at least one of the first to forty-first items, the glass having a ratio of the amount of $ZrO_2$ to the amount of $Al_2O_3$ in percent by weight of at least 0.30, or at least 0.45.

A forty-third item relates to a glass of at least one of the first to forty-second items, the glass having a diffusivity of at least 10 $\mu m^2/h$, at least 14 $\mu m^2/h$, or at least 18 $\mu m^2/h$.

A forty-fourth item relates to a glass of at least one of the first to forty-third items, the glass having a diffusivity of up to 80 $\mu m^2/h$, up to 70 $\mu m^2/h$, or up to 60 $\mu m^2/h$.

A forty-fifth item relates to a glass of at least one of the first to forty-fourth items, having a compressive stress susceptibility defined as a $CSS_{30\mu m}$ score of at least 600 MPa, at least 700 MPa, or at least 800 MPa.

A forty-sixth item relates to a glass of at least one of the first to forty-fifth items, the glass having all of the following properties:

- an amount of $ZrO_2$ of at least 6.8% by weight,

- a compressive stress susceptibility defined as a $CSS_{30\mu m}$ score of at least 600 MPa,

- a ratio of the amount of $ZrO_2$ to the amount of $Al_2O_3$ in percent by weight of at least 0.45.

A forty-seventh item relates to a glass of at least one of the first to forty-sixth items, the glass having all of the following properties:

- an amount of $ZrO_2$ of at least 6.8% by weight,

- a diffusivity of at least 18 $\mu m^2/h$,

- a ratio of the amount of $ZrO_2$ to the amount of $Al_2O_3$ in percent by weight of at least 0.45.

A forty-eighth item relates to a glass of at least one of the first to forty-seventh items, the glass having all of the following properties:

- an amount of $ZrO_2$ of at least 6.8% by weight,

- a 1000 MPa IOX-time of less than 60 minutes,

- a ratio of the amount of $ZrO_2$ to the amount of $Al_2O_3$ in percent by weight of at least 0.45.

A forty-ninth item relates to a glass of at least one of the first to forty-eighth items, the glass comprising one or more of the following:

- $P_2O_5$ in an amount of at least 1.0% by weight, such as from 1.0 to 8.0% by weight;

- ZnO in an amount of from 0.5 to 5.0% by weight,

- $K_2O$ in an amount of at least 1.0% by weight,

- MgO in an amount of at least 1.0% by weight.

A fiftieth item relates to a glass comprising the following components in percent by weight

| | |
|---|---|
| $SiO_2$ | 50.0 to 70.0 |
| $Al_2O_3$ | 0 to 18.0 |
| $B_2O_3$ | 0 to 12.0 |
| $P_2O_5$ | 0 to 8.0 |
| $TiO_2$ | 0 to 3.0 |
| $ZrO_2$ | 3.0 to 14.0 |
| ZnO | 0 to 5.0 |
| $Y_2O_3$ | 0 to 20.0 |
| $R_2O$ | 10.0 to 30.0 |
| R'O + ZnO | 0 to 15.0 |

wherein $R_2O$ is the sum of the amounts of the alkali metal oxides and R'O is the sum of the amounts of all alkali earth metal oxides.

A fifty-first item relates to a glass of the fiftieth item, wherein the glass comprises the following components in percent by weight

| | |
|---|---|
| $SiO_2$ | 51.0 to 70.0 |
| $Al_2O_3$ | 7.0 to 18.0 |
| $B_2O_3$ | 0 to 12.0 |
| $P_2O_5$ | 0 to 8.0 |
| $Li_2O$ | 0 to 5.0 |
| $Na_2O$ | 12.0 to 18.0 |
| $K_2O$ | 0.0 to 3.5 |
| MgO | 0 to 5.0 |
| CaO | 0 to 2.8 |
| ZnO | 0 to 5.0 |
| $TiO_2$ | 0 to 3.0 |
| $ZrO_2$ | 7.0 to 14.0 |
| $Y_2O_3$ | 0 to 20.0 |

A fifty-second item relates to a glass of the fiftieth or fifty-first item, wherein the glass comprises the following components in percent by weight

| | |
|---|---|
| $SiO_2$ | 51.0 to 70.0 |
| $Al_2O_3$ | 7.0 to 16.0 |
| $B_2O_3$ | 0 to 12.0 |
| $P_2O_5$ | 0 to 8.0 |
| $Li_2O$ | 0 to 5.0 |
| $Na_2O$ | 12.0 to 18.0 |
| $K_2O$ | 0.0 to 3.5 |
| $MgO$ | 0 to 5.0 |
| $CaO$ | 0 to 2.8 |
| $SrO$ | <100 ppm |
| $BaO$ | <100 ppm |
| $ZnO$ | 0 to 5.0 |
| $TiO_2$ | 0 to 3.0 |
| $ZrO_2$ | 7.0 to 14.0 |
| $Y_2O_3$ | 0 to 20.0 |

wherein a total amount of $Al_2O_3$ and $B_2O_3$ in a total amount is from 7.0 to 22.0% by weight,

and wherein the ratio of (a) the contents of $ZrO_2$ and $Y_2O_3$ in weight percent to (b) the content of $SiO_2$ in weight percent is from 0.15 to 0.40.

A fifty-third item relates to a glass of at least one of the fiftieth to fifty-second items, wherein the glass comprises the following components in percent by weight

| | |
|---|---|
| $SiO_2$ | 51.0 to 70.0 |
| $Al_2O_3$ | 7.0 to 16.0 |
| $B_2O_3$ | 0 to 12.0 |
| $P_2O_5$ | 0 to 8.0 |
| $Li_2O$ | 0 to 5.0 |
| $Na_2O$ | 12.0 to 18.0 |
| $K_2O$ | 0.0 to 3.5 |
| $MgO$ | 0 to 5.0 |
| $CaO$ | 0 to 2.8 |
| $ZnO$ | 0 to 5.0 |
| $TiO_2$ | 0 to 3.0 |
| $ZrO_2$ | 7.0 to 14.0 |
| $Y_2O_3$ | 0 to 20.0 |

wherein a ratio of the amount of $ZrO_2$ to the amount of $Al_2O_3$ in percent by weight is at least 0.50.
A fifty-fourth item relates to a glass of at least one of the fiftieth to fifty-third items, wherein the glass comprises the following components in percent by weight

| | |
|---|---|
| $SiO_2$ | 51.0 to 70.0 |

(continued)

| | |
|---|---|
| Al$_2$O$_3$ | 7.0 to 18.0 |
| B$_2$O$_3$ | 0 to 12.0 |
| P$_2$O$_5$ | 0 to 8.0 |
| Li$_2$O | 0 to 5.0 |
| Na$_2$O | 0.0 to 3.5 |
| K$_2$O | 12.0 to 18.0 |
| MgO | 0 to 5.0 |
| CaO | 0 to 2.8 |
| ZnO | 0 to 5.0 |
| TiO$_2$ | 0 to 3.0 |
| ZrO$_2$ | 7.0 to 14.0 |
| Y$_2$O$_3$ | 0 to 20.0 |

A fifty-fifth item relates to a glass of at least one of the fiftieth to fifty-fourth items, wherein the glass comprises the following components in percent by weight

| | |
|---|---|
| SiO$_2$ | 51.0 to 70.0 |
| Al$_2$O$_3$ | 7.0 to 18.0 |
| B$_2$O$_3$ | 0 to 12.0 |
| P$_2$O$_5$ | 0 to 8.0 |
| Li$_2$O | 0 to 5.0 |
| Na$_2$O | 0.0 to 3.5 |
| K$_2$O | 12.0 to 18.0 |
| MgO | 0 to 5.0 |
| CaO | 0 to 2.8 |
| ZnO | 0 to 5.0 |
| TiO$_2$ | 0 to 3.0 |
| ZrO$_2$ | 0.0 to 14.0 |
| Y$_2$O$_3$ | 7.0 to 20.0 |

A fifty-sixth item relates to a glass of at least one of the fiftieth to fifty-fifth items, having a glass transition temperature T$_g$ of at least 590°C, at least 610°C or at least 625°C.

A fifty-seventh item relates to a glass of at least one of the fiftieth to fifty-sixth items, having a compressive stress susceptibility defined as a CSS$_{200\mu m}$ score of at least 800 MPa, optionally in a 100% KNO$_3$ bath.

A fifty-eighth item relates to a glass of at least one of the fiftieth to fifty-seventh items, having a chemical resistance characterized by one or more of

(a) a hydrolytic resistance value in $\mu$g/g sodium equivalent of less than 100, less than 60, less than 40, or less than 30;

(b) an alkali resistance value in mg/dm$^2$ weight loss of less than 50, less than 40, less than 30, or less than 20;

(c) an acid resistance value in mg/dm$^2$ weight loss of less than 30, less than 20, less than 15, less than 10, or less than 5.

A fifty-ninth item relates to a glass of at least one of the fiftieth to fifty-eighth items, having a compressive stress susceptibility in MPa relative to the total content of alkali metal oxides $R_2O$ and alkali earth metal oxides $R'O$ in weight percent $\frac{CSS_{200\mu m}}{[R_2O]+[R'O]}$ of at least 35, at least 50, at least 60 or at least 80.

A sixtieth item relates to a glass of at least one of the fiftieth to fifty-ninth items, having a compressive stress susceptibility in MPa relative to the coefficient of thermal expansion in a temperature range of from 20 to 300°C in ppm/K $\frac{CSS_{200\mu m}}{CTE}$ of at least 85, at least 100, at least 110 or at least 120.

A sixty-first item relates to a glass of at least one of the fiftieth to sixtieth items, having a total amount of alkali metal oxides, alkali earth metal oxides and ZnO of less than 27.0% by weight.

A sixty-second item relates to a glass of at least one of the fiftieth to sixty-first items, wherein a ratio of a second most abundant alkali metal oxide B, and a most abundant alkali metal oxide A in weight percent is less than 0.23, less than 0.22, or less than 0.18.

A sixty-third item relates to a glass of the sixty-second item, wherein A = $Na_2O$ and B = $K_2O$, or B = $Na_2O$ and A = $K_2O$.

A sixty-fourth item relates to a glass of at least one of the fiftieth to sixty-third items, having a ratio of the weight amount of $K_2O$ relative to the sum of the weight amounts of $Li_2O$ and $Na_2O$ of less than 0.23, less than 0.22, or less than 0.18.

A sixty-fifth item relates to a glass of at least one of the fiftieth to sixty-fourth items, having a ratio of the weight amount of $Na_2O$ relative to the sum of the weight amounts of $Li_2O$ and $K_2O$ of less than 0.23, less than 0.22, or less than 0.18.

A sixty-sixth item relates to a glass of at least one of the fiftieth to sixty-fifth items, having a ratio of the weight amount of $SiO_2$ relative to the sum of the weight amounts of $Li_2O$ and $Na_2O$ of less than 5.5, less than 4.9, or less than 4.5.

A sixty-seventh item relates to a glass of at least one of the fiftieth to sixty-sixth items, comprising - $SiO_2$ in an amount of at least 50.0% by weight or at least 55.0% by weight, and/or

$K_2O$ in an amount of less than 3.0% by weight.

A sixty-eighth item relates to a glass of at least one of the fiftieth to sixty-seventh items, wherein the sum of the contents of $Al_2O_3$ and $B_2O_3$ is less than 20.5% by weight, less than 18.0% by weight, or less than 17.0% by weight.

A sixty-ninth item relates to a glass of at least one of the fiftieth to sixty-eighth items, wherein the sum of the contents of $Al_2O_3$ and $B_2O_3$ is at least 5.0% by weight, at least 7.0% by weight, at least 8.5% by weight, or at least 10.5% by weight.

A seventieth item relates to a glass of at least one of the fiftieth to sixty-ninth items, wherein the sum of the contents of all alkali metal oxides $R_2O$ is less than 20.5% by weight, less than 19.5% by weight, or less than 18.5% by weight.

A seventy-first item relates to a glass of at least one of the fiftieth to seventieth items, wherein the ratio of (a) the content of the second most abundant alkali metal oxide in weight percent to (b) the sum of the contents of $Al_2O_3$ and $B_2O_3$ in weight percent from 0.0 to 0.4, from 0.0 to 0.3 or from 0.0 to 0.2.

A seventy-second item relates to a glass of at least one of the fiftieth to seventy-first items, wherein the sum of the contents of MgO and the second most abundant alkali metal oxide in weight percent is less than 8.0% by weight, less than 6.0% by weight or less than 4.0% by weight.

A seventy-third item relates to a glass of at least one of the fiftieth to seventy-second items, wherein the glass comprises the following components in percent by weight

| | |
|---|---|
| $SiO_2$ | 50.0 to 70.0 |
| $Al_2O_3$ | 0 to 18.0 |
| $B_2O_3$ | 0 to 12.0 |
| $P_2O_5$ | 0 to 8.0 |
| $Li_2O$ | 0 to 5.0 |
| $Na_2O+K_2O$ | 10.0 to 20.0 |
| MgO | 0 to 5.0 |
| CaO | 0 to 2.8 |
| SrO | 0 to 2.0 |
| BaO | 0 to 2.0 |

(continued)

| | |
|---|---|
| ZnO | 0 to 5.0 |
| TiO$_2$ | 0 to 3.0 |
| ZrO$_2$ | 3.0 to 14.0 |
| Y$_2$O$_3$ | 0 to 20.0 |

A seventy-fourth item relates to a glass of at least one of the fiftieth to seventy-third items, wherein the glass comprises the following components in percent by weight

| | |
|---|---|
| SiO$_2$ | 50.0 to 68.0 |
| Al$_2$O$_3$ | 2.0 to 17.0 |
| B$_2$O$_3$ | 0 to 11.0 |
| P$_2$O$_5$ | 0 to 7.0 |
| Li$_2$O | 0 to 4.0 |
| Na$_2$O | 12.0 to 20.0 |
| K$_2$O | 0 to 2.8 |
| MgO | 0 to 4.5 |
| CaO | 0 to 2.5 |
| SrO | 0 to 1.0 |
| BaO | 0 to 1.0 |
| ZnO | 0 to 4.0 |
| TiO$_2$ | 0 to 2.0 |
| ZrO$_2$ | 6.0 to 14.0 |
| Y$_2$O$_3$ | 0 to 15.0 |

A seventy-fifth item relates to a glass of at least one of the fiftieth to seventy-fourth items, wherein the glass comprises the following components in percent by weight

| | |
|---|---|
| SiO$_2$ | 50.0 to 66.0 |
| Al$_2$O$_3$ | 5.0 to 16.0 |
| B$_2$O$_3$ | 0 to 10.0 |
| P$_2$O$_5$ | 0 to 6.0 |
| Li$_2$O | 0 to 2.0 |
| Na$_2$O | 12.0 to 18.0 |
| K$_2$O | 0 to 2.5 |
| MgO | 0 to 4.0 |
| CaO | 0 to 2.5 |
| SrO | 0 to 1.0 |
| BaO | 0 to 1.0 |
| ZnO | 0 to 3.0 |
| TiO$_2$ | 0 to 1.0 |
| ZrO$_2$ | 6.5 to 13.0 |

(continued)

| | |
|---|---|
| $Y_2O_3$ | 0 to 10.0 |

A seventy-sixth item relates to a glass of at least one of the fiftieth to seventy-fifth items, wherein the glass comprises the following components in percent by weight

| | |
|---|---|
| $SiO_2$ | 50.0 to 64.0 |
| $Al_2O_3$ | 5.0 to 16.0 |
| $B_2O_3$ | 0 to 10.0 |
| $P_2O_5$ | 0 to 5.0 |
| $Li_2O$ | < 100 ppm |
| $Na_2O$ | 12.0 to 18.0 |
| $K_2O$ | 0 to 2.0 |
| MgO | 0 to 3.5 |
| CaO | 0 to 2.5 |
| SrO | 0 to 1.0 |
| BaO | 0 to 1.0 |
| ZnO | 0 to 2.0 |
| $TiO_2$ | < 100 ppm |
| $ZrO_2$ | 6.5 to 13.0 |
| $Y_2O_3$ | 0 to 5.0 |

A seventy-seventh item relates to a glass of at least one of the fiftieth to seventy-sixth items, wherein the amount of $ZrO_2$ is at least 4.5% by weight, at least 5.1% by weight, or at least 6.0% by weight.

A seventy-eighth item relates to a glass of at least one of the fiftieth to seventy-seventh items, wherein the sum of the amounts of arsenic and antimony is less than 100 ppm.

A seventy-ninth item relates to a glass of at least one of the fiftieth to seventy-eighth items, wherein the sum of the amounts of lead and bismuth is less than 100 ppm.

An eightieth item relates to a glass of at least one of the fiftieth to seventy-ninth items, wherein

(A) the most abundant alkali metal oxide is $Na_2O$, the second most abundant alkali metal oxide, if present, is $K_2O$, and the third most abundant alkali metal oxide, if present, is $Li_2O$; or

(B) the most abundant alkali metal oxide is $K_2O$, the second most abundant alkali metal oxide, if present, is $Na_2O$, and the third most abundant alkali metal oxide, if present, is $Li_2O$.

An eighty-first item relates to a glass of at least one of the fiftieth to eightieth items, wherein the amount of the alkali earth metal oxides R'O is less than 10.0% by weight, less than 6.0% by weight, less than 4.0% by weight or less than 2.0% by weight.

An eighty-second item relates to a glass of at least one of the fiftieth to eighty-first items, wherein glass composition exhibits one or more of

- a temperature $T_4$ of at least 1190°C, at least 1200°C or at least 1250°C,

- a temperature $T_3$ of at least 1350°C, at least 1400°C or at least 1450°C,

- a VFT constant A of <0.00, optionally from -4.00 to -2.00,

- a VFT constant B of >5,000°C, optionally from 6,000°C to 8,000°C, and

- a VFT constant $T_0$ of 150 to 550°C, such as from 200 to 400°C, or up to 355°C.

An eighty-third item relates to a glass of at least one of the fiftieth to eighty-second items, wherein the ratio of (a) the sum of the contents of all alkali earth metal oxides R'O in weight percent to (b) the content of $SiO_2$ in weight percent is from 0.0 to <0.06, <0.05, <0.04, <0.03, <0.02 or <0.01.

An eighty-fourth item relates to a glass of at least one of the fiftieth to eighty-third items, wherein the ratio of (a) the sum of the contents of all alkali metal oxides $R_2O$ in weight percent to (b) the content of $SiO_2$ in weight percent is from 0.0 to <0.37, <0.35, <0.30 or <0.28.

An eighty-fifth item relates to a glass of at least one of the fiftieth to eighty-fourth items, wherein the ratio of (a) the sum of the contents of $ZrO_2$ and $Y_2O_3$ in weight percent to (b) the content of $SiO_2$ in weight percent is from 0.08 to 0.40, from 0.10 to 0.35 or from 0.19 to 0.25.

An eighty-sixth item relates to a glass of at least one of the fiftieth to eighty-fifth items, wherein the ratio of (a) the sum of the contents of $ZrO_2$ and $Y_2O_3$ in weight percent to (b) the sum of the contents of $Al_2O_3$ and $B_2O_3$ in weight percent is from 0.30 to 2.00, 0.35 to 1.80 or from 0.65 to 1.25.

An eighty-seventh item relates to a glass of at least one of the fiftieth to eighty-sixth items, wherein the sum of the contents of $Al_2O_3$ and $ZrO_2$ in weight percent is from 10.0 to 30.0, 15.0 to 28.0 or 22.0 to 26.0.

An eighty-eighth item relates to a glass of at least one of the fiftieth to eighty-seventh items, the glass having a steepness of its temperature-viscosity curve characterized by a difference between its temperatures $T_4$ and $T_{7.6}$ of from 250 to 400 K, from 265 to 380 K, or from 280 to 360 K.

An eighty-ninth item relates to a glass of at least one of the fiftieth to eighty-eighth items, the glass having an amount of $ZrO_2$ is at least 6.8% by weight, or at least 7.5% by weight.

A ninetieth item relates to a glass of at least one of the fiftieth to eighty-ninth items, the glass having a ratio of the amount of $ZrO_2$ to the amount of $Al_2O_3$ in percent by weight of at least 0.30, or at least 0.45.

A ninety-first item relates to a glass of at least one of the fiftieth to ninetieth items, the glass having a diffusivity of at least 10 $\mu m^2/h$, at least 14 $\mu m^2/h$, or at least 18 $\mu m^2/h$.

A ninety-second item relates to a glass of at least one of the fiftieth to ninety-first items, the glass having a diffusivity of up to 80 $\mu m^2/h$, up to 70 $\mu m^2/h$, or up to 60 $\mu m^2/h$.

A ninety-third item relates to a glass of at least one of the fiftieth to ninety-second items, having a compressive stress susceptibility defined as a $CSS_{30\mu m}$ score of at least 600 MPa, at least 700 MPa, or at least 800 MPa.

A ninety-fourth item relates to a glass of at least one of the fiftieth to ninety-third items, the glass having all of the following properties:

- an amount of $ZrO_2$ of at least 6.8% by weight,

- a compressive stress susceptibility defined as a $CSS_{30\mu m}$ score of at least 600 MPa,

- a ratio of the amount of $ZrO_2$ to the amount of $Al_2O_3$ in percent by weight of at least 0.45.

A ninety-fifth item relates to a glass of at least one of the fiftieth to ninety-fourth items, the glass having all of the following properties:

- an amount of $ZrO_2$ of at least 6.8% by weight,

- a diffusivity of at least at least 18 $\mu m^2/h$,

- a ratio of the amount of $ZrO_2$ to the amount of $Al_2O_3$ in percent by weight of at least 0.45.

A ninety-fourth item relates to a glass of at least one of the fiftieth to ninety-fifth items, the glass having all of the following properties:

- an amount of $ZrO_2$ of at least 6.8% by weight,

- a a 1000 MPa IOX-time of less than 60 minutes,

- a ratio of the amount of $ZrO_2$ to the amount of $Al_2O_3$ in percent by weight of at least 0.45.

A ninety-fifth item relates to a glass of at least one of the fiftieth to ninety-fourth items, the glass comprising one or more of the following:

- P$_2$O$_5$ in an amount of at least 1.0% by weight, such as from 1.0 to 8.0% by weight;

- ZnO in an amount of from 0.5 to 5.0% by weight,

- K$_2$O in an amount of at least 1.0% by weight,

- MgO in an amount of at least 1.0% by weight.

A ninety-sixth item relates to a glass of at least one of the fiftieth to ninety-fifth items, having a coefficient of thermal expansion in a temperature range of from 20 to 300°C of less than $9.2*10^{-6}$ K$^{-1}$, less than $8.8*10^{-6}$ K$^{-1}$, less than $8.5*10^{-6}$ K$^{-1}$ or less than $8.2*10^{-6}$ K$^{-1}$.

A ninety-seventh item relates to a glass of at least one of the fiftieth to ninety-sixth items, having a Young's modulus of at least 70 GPa, at least 74 GPa, at least 75 GPa, or at least 78 GPa.

A ninety-eighth item relates to a glass of at least one of the fiftieth to ninety-seventh items, having a Poisson's ratio of from 0.220 to 0.260, from 0.225 to 0.255, of from 0.230 to 0.250.

A ninety-ninth item relates to a glass of at least one of the fiftieth to ninety-eighth items, having a 1000 MPa IOX-time of less than 60 minutes.

A hundredth item relates to a glass of at least one of the fiftieth to ninety-ninth items, having a density of from 2.530 to 2.800 g/cm$^3$, from 2.580 to 2.700 g/cm$^3$, or from 2.600 to 2.690 g/cm$^3$.

A hundred-first item relates to a glass of at least one of the fiftieth to hundredth items, wherein the glass comprises the following components in percent by weight

| | |
|---|---|
| SiO$_2$ | 51.0 to 70.0 |
| Al$_2$O$_3$ | 7.0 to 18.0 |
| B$_2$O$_3$ | 0 to 12.0 |
| P$_2$O$_5$ | 0 to 8.0 |
| Li$_2$O | 0 to 5.0 |
| Na$_2$O | 12.0 to 18.0 |
| K$_2$O | 0.0 to 3.5 |
| MgO | 0 to 5.0 |
| CaO | 0 to 2.8 |
| ZnO | 0 to 5.0 |
| TiO$_2$ | 0 to 3.0 |
| ZrO$_2$ | 0.0 to 14.0 |
| Y$_2$O$_3$ | 7.0 to 20.0 |

A hundred-second item relates to a glass of at least one of the fiftieth to hundred-first items, wherein the glass comprises the following components in percent by weight

| | |
|---|---|
| SiO$_2$ | 51.0 to 70.0 |
| Al$_2$O$_3$ | 2.0 to 18.0 |
| B$_2$O$_3$ | 2.0 to 12.0 |
| P$_2$O$_5$ | 0 to 8.0 |
| Li$_2$O | 0 to 5.0 |
| Na$_2$O | 12.0 to 18.0 |
| K$_2$O | 0.0 to 3.5 |
| MgO | 0 to 5.0 |

(continued)

| | |
|---|---|
| CaO | 0 to 2.8 |
| ZnO | 0 to 5.0 |
| TiO$_2$ | 0 to 3.0 |
| ZrO$_2$ | 3.0 to 14.0 |
| Y$_2$O$_3$ | 0 to 20.0 |

A hundred-third item relates to a glass of at least one of the fiftieth to hundred-second items, wherein the glass comprises the following components in percent by weight

| | |
|---|---|
| SiO$_2$ | 51.0 to 70.0 |
| Al$_2$O$_3$ | 7.0 to 18.0 |
| B$_2$O$_3$ | 0 to 12.0 |
| P$_2$O$_5$ | 1.0 to 8.0 |
| Li$_2$O | 0 to 5.0 |
| Na$_2$O | 12.0 to 18.0 |
| K$_2$O | 0.0 to 3.5 |
| MgO | 0 to 5.0 |
| CaO | 0 to 2.8 |
| ZnO | 0 to 5.0 |
| TiO$_2$ | 0 to 3.0 |
| ZrO$_2$ | 3.0 to 14.0 |
| Y$_2$O$_3$ | 0 to 20.0 |

A hundred-fourth item relates to a glass of at least one of the fiftieth to hundred-third items, wherein the glass comprises the following components in percent by weight

| | |
|---|---|
| SiO$_2$ | 51.0 to 70.0 |
| Al$_2$O$_3$ | 7.0 to 18.0 |
| B$_2$O$_3$ | 0 to 12.0 |
| P$_2$O$_5$ | 0 to 8.0 |
| Li$_2$O | 0 to 5.0 |
| Na$_2$O | 12.0 to 18.0 |
| K$_2$O | 0.0 to 3.5 |
| MgO | 1.0 to 5.0 |
| CaO | 0 to 2.8 |
| ZnO | 0 to 5.0 |
| TiO$_2$ | 0 to 3.0 |
| ZrO$_2$ | 3.0 to 14.0 |
| Y$_2$O$_3$ | 0 to 20.0 |

A hundred-fifth item relates to a glass of at least one of the fiftieth to hundred-fourth items, wherein the glass comprises the following components in percent by weight

| | |
|---|---|
| $SiO_2$ | 51.0 to 70.0 |
| $Al_2O_3$ | 7.0 to 18.0 |
| $B_2O_3$ | 0 to 12.0 |
| $P_2O_5$ | 1.0 to 8.0 |
| $Li_2O$ | 0 to 5.0 |
| $Na_2O$ | 12.0 to 18.0 |
| $K_2O$ | 0.0 to 3.5 |
| MgO | 0 to 5.0 |
| CaO | 0 to 2.8 |
| ZnO | 1.0 to 5.0 |
| $TiO_2$ | 0 to 3.0 |
| $ZrO_2$ | 3.0 to 14.0 |
| $Y_2O_3$ | 0 to 20.0 |

A hundred-sixth item relates to a glass article, optionally having a thickness of 1,000 $\mu$m or less, and comprising or consisting of

(A) a glass according to one of the first to forty-ninth items, or

(B) a glass according to one of the fiftieth to hundred-fifth items.

A hundred-seventh item relates to a glass article according to the hundred-sixth item having a thickness of less than 1,000 $\mu$m, less than 850 $\mu$m, less than 300 $\mu$m, less than 200 $\mu$m, or less than 100 $\mu$m.
A hundred-eighth item relates to a glass article according to the hundred-sixth or hundred-seventh item having a thickness of at least 5 $\mu$m, at least 10 $\mu$m or at least 15 $\mu$m.
A hundred-ninth item relates to a glass article according to one of the hundred-sixth to hundred-eighth item having a thickness less than 80 $\mu$m, less than 60 $\mu$m, or less than 40 $\mu$m.
A hundred-tenth item relates to a glass article according to at least one of the hundred-sixth to hundred-ninth item having a warp of less than 3.0 mm, less than 2.0 mm, or less than 1.0 mm.
A hundred-eleventh item relates to a glass article according to at least one of the hundred-sixth to hundred-tenth item having a total thickness variation of less than 15 $\mu$m, less than 10 $\mu$m, or less than 5 $\mu$m.
A hundred-twelfth item relates to a glass article according to at least one of the hundred-sixth to hundred-eleventh item having an area of at least 10 cm$^2$, at least 15 cm$^2$, or at least 20 cm$^2$.
A hundred-thirteenth item relates to a glass article according to at least one of the hundred-sixth to hundred-twelfth item having an area of less than 10,000 cm$^2$, less than 1,000 cm$^2$, or less than 200 cm$^2$.
A hundred-fourteenth item relates to a glass article according to at least one of the hundred-sixth to hundred-thirteenth item having, on one or both of its major surfaces, a surface roughness $R_a$ of not more than 5.0 nm, not more than 3.0 nm or not more than 1.5 nm.
A hundred-fifteenth item relates to a glass article according to at least one of the hundred-sixth to hundred-fourteenth item having, on one or both of its major surfaces, a chemical resistance characterized by one or more of

(a) a hydrolytic resistance value in $\mu$g/g sodium equivalent of less than 100, less than 60, less than 40, or less than 30;

(b) an alkali resistance value in mg/dm$^2$ weight loss of less than 50, less than 40, less than 30, or less than 20;

(c) an acid resistance value in mg/dm$^2$ weight loss of less than 30, less than 20, less than 15, less than 10, or less than 5.

A hundred-sixteenth item relates to a glass article according to at least one of the hundred-sixth to hundred-fifteenth item having a Vickers hardness of at least 580, at least 590 or at least 600.

A hundred-seventeenth item relates to a glass article according to at least one of the hundred-sixth to hundred-sixteenth item, exhibiting a three-point bending strength of at least 100 MPa, at least 200 MPa or at least 300 MPa.

A hundred-eighteenth item relates to a glass article according to at least one of the hundred-sixth to hundred-seventeenth item, having- a thickness of less than 100 $\mu$m,

- a glass with a compressive stress susceptibility defined as a $CSS_{30\mu m}$ score of at least 600 MPa,

- a composition of the following components in percent by weight

| | |
|---|---|
| SiO$_2$ | 50.0 to 70.0 |
| Al$_2$O$_3$ | 0 to 18.0 |
| B$_2$O$_3$ | 0 to 12.0 |
| P$_2$O$_5$ | 0 to 8.0 |
| Li$_2$O | 0 to 5.0 |
| Na$_2$O+K$_2$O | 10.0 to 20.0 |
| MqO | 0 to 5.0 |
| CaO | 0 to 2.8 |
| SrO | 0 to 2.0 |
| BaO | 0 to 2.0 |
| ZnO | 0 to 5.0 |
| TiO$_2$ | 0 to 3.0 |
| ZrO$_2$ | 3.0 to 14.0 |
| Y$_2$O$_3$ | 0 to 20.0 |

A hundred-nineteenth item relates to a glass article according to at least one of the hundred-sixth to hundred-eighteenth item, having

- a thickness of less than 100 $\mu$m,

- a glass with a diffusivity of at least 18 $\mu$m$^2$/h,

- a composition of the following components in percent by weight

| | |
|---|---|
| SiO$_2$ | 50.0 to 70.0 |
| Al$_2$O$_3$ | 0 to 18.0 |
| B$_2$O$_3$ | 0 to 12.0 |
| P$_2$O$_5$ | 0 to 8.0 |
| Li$_2$O | 0 to 5.0 |
| Na$_2$O+K$_2$O | 10.0 to 20.0 |
| MgO | 0 to 5.0 |
| CaO | 0 to 2.8 |
| SrO | 0 to 2.0 |
| BaO | 0 to 2.0 |

(continued)

| | |
|---|---|
| ZnO | 0 to 5.0 |
| TiO$_2$ | 0 to 3.0 |
| ZrO$_2$ | 3.0 to 14.0 |
| Y$_2$O$_3$ | 0 to 20.0 |

A hundred-twentieth item relates to a glass article according to at least one of the hundred-sixth to hundred-nineteenth items comprising an ion-exchanged layer on one or both of its major surfaces.

A hundred-twenty-first item relates to a glass article according to the hundred-twentieth item having, on one or both of its major surfaces, a compressive stress of at least 400 MPa, at least 700 MPa, at least 800 MPa, or at least 900 MPa.

A hundred-twenty-second item relates to a glass article according to the hundred-twentieth or hundred-twenty-first items having, on one or both of its major surfaces, a ratio of compressive stress in MPa to article thickness in µm of at least 4.0, at least 5.0, or at least 6.0.

A hundred-twenty-third item relates to a glass article according to at least one of the hundred-twentieth to hundred-twenty-second items, having, on one or both of its major surfaces, a ratio of compressive stress in MPa to depth of ion exchanged layer in µm of at least 50, at least 75, or at least 90.

A hundred-twenty-fourth item relates to a glass article according to at least one of the hundred-twentieth to hundred-twenty-third items, exhibiting a three-point bending strength of at least 400 MPa, at least 500 MPa or at least 600 MPa.

A hundred-twenty-fifth item relates to a glass article according to at least one of the hundred-twentieth to hundred-twenty-fourth items, having a thickness of 20 to 40 µm, such as 25 to 35 µm and a compressive stress on one or both of its major surfaces of at least 800 MPa, at least 850 MPa, or at least 900 MPa.

A hundred-twenty-sixth item relates to a glass article according to at least one of the hundred-twentieth to hundred-twenty-fifth items, having a DoL on one or both of its major surfaces of from 6 to 12 µm, or from 7 to 11 µm.

A hundred-twenty-seventh item relates to a glass article according to at least one of the hundred-twentieth to hundred-twenty-sixth items, having a DoL of at least 6 µm, at least 7 µm, or at least 8 µm.

A hundred-twenty-eighth item relates to a glass article according to at least one of the hundred-twentieth to hundred-twenty-seventh items, having a DoL of up to 15 µm, up to 13 µm, up to 12 µm, or up to 11 µm.

A hundred-twenty-ninth item relates to a glass article according to at least one of the hundred-twentieth to hundred-twenty-eighth items, having a DoL from 15 to 25% of the article thickness, or from 16 to 20% of the article thickness.

A hundred-thirtieth item relates to a glass article according to at least one of the hundred-twentieth to hundred-twenty-ninth items, having a DoL of at least 15% of the article thickness, at least 16%, or at least 17% of the article thickness.

A hundred-thirty-first item relates to a glass article according to at least one of the hundred-twentieth to hundred-thirtieth items, having a DoL of up to 33%, up to 25%, or up to 20% of the article thickness.

A hundred-thirty-second item relates to a glass article according to at least one of the hundred-twentieth to hundred-thirty-first item, having

- a thickness of less than 100 µm,

- a composition of the following components in percent by weight

| | |
|---|---|
| SiO$_2$ | 50.0 to 70.0 |
| Al$_2$O$_3$ | 0 to 18.0 |
| B$_2$O$_3$ | 0 to 12.0 |
| P$_2$O$_5$ | 0 to 8.0 |
| Li$_2$O | 0 to 5.0 |
| Na$_2$O+K$_2$O | 10.0 to 20.0 |
| MgO | 0 to 5.0 |

(continued)

| | |
|---|---|
| CaO | 0 to 2.8 |
| SrO | 0 to 2.0 |
| BaO | 0 to 2.0 |
| ZnO | 0 to 5.0 |
| $TiO_2$ | 0 to 3.0 |
| $ZrO_2$ | 3.0 to 14.0 |
| $Y_2O_3$ | 0 to 20.0 |

A hundred-thirty-third item relates to a glass article according to at least one of the hundred-twentieth to hundred-thirty-second item, having

- a thickness of less than 80 $\mu$m,

- a composition of the following components in percent by weight

| | |
|---|---|
| $SiO_2$ | 50.0 to 70.0 |
| $Al_2O_3$ | 0 to 18.0 |
| $B_2O_3$ | 0 to 12.0 |
| $P_2O_5$ | 0 to 8.0 |
| $Li_2O$ | 0 to 5.0 |
| $Na_2O+K_2O$ | 10.0 to 20.0 |
| MgO | 0 to 5.0 |
| CaO | 0 to 2.8 |
| SrO | 0 to 2.0 |
| BaO | 0 to 2.0 |
| ZnO | 0 to 5.0 |
| $TiO_2$ | 0 to 3.0 |
| $ZrO_2$ | 3.0 to 14.0 |
| $Y_2O_3$ | 0 to 20.0 |

A hundred-thirty-fourth item relates to a glass article according to at least one of the hundred-twentieth to hundred-thirty-third item, having

- a thickness of less than 60 $\mu$m,

- a composition of the following components in percent by weight

| | |
|---|---|
| $SiO_2$ | 50.0 to 70.0 |
| $Al_2O_3$ | 0 to 18.0 |
| $B_2O_3$ | 0 to 12.0 |
| $P_2O_5$ | 0 to 8.0 |
| $Li_2O$ | 0 to 5.0 |

(continued)

| Na$_2$O+K$_2$O | 10.0 to 20.0 |
|---|---|
| MqO | 0 to 5.0 |
| CaO | 0 to 2.8 |
| SrO | 0 to 2.0 |
| BaO | 0 to 2.0 |
| ZnO | 0 to 5.0 |
| TiO$_2$ | 0 to 3.0 |
| ZrO$_2$ | 3.0 to 14.0 |
| Y$_2$O$_3$ | 0 to 20.0 |

A hundred-thirty-fifth item relates to a glass article according to at least one of the hundred-twentieth to hundred-thirty-fourth item, having

- a thickness of less than 80 μm,

- a DoL of from 6 to 12 μm,

- a composition of the following components in percent by weight

| SiO$_2$ | 50.0 to 70.0 |
|---|---|
| Al$_2$O$_3$ | 0 to 18.0 |
| B$_2$O$_3$ | 0 to 12.0 |
| P$_2$O$_5$ | 0 to 8.0 |
| Li$_2$O | 0 to 5.0 |
| Na$_2$O+K$_2$O | 10.0 to 20.0 |
| MqO | 0 to 5.0 |
| CaO | 0 to 2.8 |
| SrO | 0 to 2.0 |
| BaO | 0 to 2.0 |
| ZnO | 0 to 5.0 |
| TiO$_2$ | 0 to 3.0 |
| ZrO$_2$ | 3.0 to 14.0 |
| Y$_2$O$_3$ | 0 to 20.0 |

A hundred-thirty-sixth item relates to an electronic device comprising

(A) a glass according to any of the first to forty-ninth item,

(B) a glass according to any of the fiftieth to hundred-fifth item,

(C) a glass article according to any one of the hundred- sixth hundred-nineteenth item, and/or

(D) a glass article according to the hundred-twentieth to hundred-thirty-fifth item.

A hundred-thirty-seventh item relates to an electronic device according to the hundred-thirty-sixth item, comprising a display, the display comprising

(A) the glass according to any of the first to forty-ninth item,

(B) the glass according to any of the fiftieth to hundred-fifth item,

(C) the glass article according to any one of the hundred- sixth hundred-nineteenth item, and/or

(D) the glass article according to the hundred-twentieth to hundred-thirty-fifth item.

A hundred-thirty-eighth item relates to an electronic device according to the hundred-thirty-sixth or hundred-thirty-seventh item, wherein the electronic device is a foldable device, such as a foldable smartphone or tablet computer.

Examples

Exemplary compositions of glasses according to this invention were prepared by melting appropriate glass raw materials. The following table provides an overview of compositions and properties of these glasses.

**1. Compositions examined**

*Table 1*

| Example No. [wt.%] | 1 | 2 | 3 | 4 | 5 | 6 |
|---|---|---|---|---|---|---|
| $SiO_2$ | 58.7 | 58.2 | 53.1 | 55.5 | 61.6 | 58.7 |
| $Al_2O_3$ | 9.1 | 14.9 | 13.6 | 14.2 | 0.1 | 12.1 |
| $B_2O_3$ | 4.0 | 0.0 | 0.0 | 0.0 | 10.0 | 2.0 |
| $P_2O_5$ | 0.0 | 0.0 | 0.0 | 0.0 | 0.0 | 0.0 |
| $Na_2O$ | 15.3 | 15.1 | 13.6 | 14.3 | 15.3 | 14.8 |
| $K_2O$ | 0.0 | 0.0 | 0.0 | 0.0 | 0.0 | 0.0 |
| $ZrO_2$ | 12.1 | 11.2 | 0.0 | 5.3 | 12.3 | 12.0 |
| $Y_2O_3$ | 0.0 | 0.0 | 19.4 | 10.2 | 0.0 | 0.0 |
| $SnO_2$ | 0.1 | 0.1 | 0.1 | 01. | 0.1 | 0.1 |
| Cl | 0.3 | 0.2 | 0.2 | 0.2 | 0.3 | 0.1 |
| Properties | | | | | | |
| CTE [ppm/K] | 7.8 | 7.99 | 8.3 | 8.1 | 7.6 | 7.8 |
| Young's modulus [GPa] | 79 | 79 | 80 | 78 | 85 | 78 |
| Poisson constant | 0.234 | 0.231 | 0.250 | 0.244 | 0.239 | 0.234 |
| $T_g$ [°C] | 631 | 762 | 716 | 738 | 617 | 681 |
| Density [g/cm$^3$] | 2.60 | 2.58 | 2.76 | 2.67 | 2.64 | 2.59 |
| VFT A | -3.12 | -3.08 | n.d. | -3.00 | -2.04 | -3.24 |
| VFT B [°C] | 7041 | 7039 | n.d. | 6407 | 4323 | 7507 |
| VFT $T_0$ [°C] | 208 | 346 | n.d. | 353 | 329 | 238 |
| T14.7 [°C] | 604 | 742 | n.d. | 715 | 588 | 657 |
| T13 [°C] | 645 | 784 | n.d. | 753 | 617 | 700 |
| T7.6 [°C] | 865 | 1005 | n.d. | 957 | 778 | 931 |

(continued)

| Example No. [wt.%] | 1 | 2 | 3 | 4 | 5 | 6 |
|---|---|---|---|---|---|---|
| T4 [°C] | 1198 | 1340 | n.d. | 1268 | 1046 | 1276 |
| T3 [°C] | 1360 | 1503 | n.d. | 1421 | 1188 | 1442 |
| T2 [°C] | 1585 | 1731 | n.d. | 1634 | 1400 | 1672 |

Table 2

| Example No. [wt.%] | 7 | 8 | 9 | 10 | 11 |
|---|---|---|---|---|---|
| $SiO_2$ | 60.5 | 58.8 | 55.6 | 56.3 | 54.6 |
| $Al_2O_3$ | 14.5 | 10.6 | 14.3 | 10.2 | 14.6 |
| $B_2O_3$ | 0.0 | 3.1 | 0.0 | 3.1 | 0.0 |
| $P_2O_5$ | 0.0 | 0.0 | 4.1 | 4.1 | 0.0 |
| $Na_2O$ | 14.3 | 15.0 | 14.3 | 14.4 | 17.3 |
| $K_2O$ | 2.5 | 0.0 | 0.0 | 0.0 | 1.2 |
| $ZrO_2$ | 7.7 | 12.0 | 11.2 | 11.3 | 11.6 |
| $Y_2O_3$ | 0.0 | 0.0 | 0.0 | 0.0 | 0.0 |
| $SnO_2$ | 0.1 | 0.1 | 0.1 | 0.1 | 0.1 |
| Cl | 0.2 | 0.2 | 0.2 | 0.2 | 0.2 |
| Properties | | | | | |
| CTE [ppm/K] | 8.6 | 7.8 | 7.8 | 7.6 | 9.1 |
| Young's modulus [GPa] | 77 | 78 | 75 | 74 | 79 |
| Poisson constant | 0.235 | 0.236 | 0.231 | 0.233 | 0.242 |
| $T_g$ [°C] | 657 | 658 | 765 | 655 | 689 |
| Density [g/cm$^3$] | 2.54 | 2.60 | 2.57 | 2.57 | 2.62 |
| VFT A | -3.03 | -2.90 | -2.16 | -3.08 | -3.48 |
| VFT B [°C] | 7832 | 6817 | 5663 | 7177 | 7536 |
| VFT $T_0$ [°C] | 190 | 241 | 410 | 222 | 247 |
| T14.7 [°C] | 632 | 628 | 746 | 625 | 661 |
| T13 [°C] | 679 | 670 | 783 | 668 | 704 |
| T7.6 [°C] | 927 | 890 | 990 | 894 | 927 |
| T4 [°C] | 1304 | 1229 | 1330 | 1235 | 1254 |
| T3 [°C] | 1489 | 1397 | 1508 | 1402 | 1410 |
| T2 [°C] | 1747 | 1633 | 1773 | 1635 | 1622 |

**2. Ion exchange treatment**

Thin sheets of glass were prepared from compositions 1 to 4 and 6. The sheet thickness was 200 μm. Subsequently, the sheets were ion exchange treated in a 100% $KNO_3$ salt bath at 440°C for 30 minutes. The resulting compressive stress and depth of the ion exchanged layer (DoL) are listed in the following table.

*Table 3*

| Example No. | 1 | 2 | 3 | 4 | 6 | 7 | 8 |
|---|---|---|---|---|---|---|---|
| Compressive stress [MPa] | 1260 | 1431 | 1276 | 1303 | 1332 | 1059 | 1312 |
| DoL [$\mu$m] | 7.5 | 14.6 | 9.1 | 10.5 | 10.6 | 16.5 | 8.9 |
| $R_2O$ [wt.%] | 15.3 | 15.1 | 13.6 | 14.3 | 14.8 | 16.8 | 15.0 |
| CTE [ppm/K] | 7.8 | 7.99 | 8.3 | 8.1 | 7.8 | 8.6 | 7.8 |
| $\dfrac{CSS_{200\mu m}}{[R_2O] + [R'O]}$ | 82.4 | 94.8 | 93.8 | 91.1 | 90.0 | 63.0 | 87.5 |
| $CSS_{200\mu m}$/CTE | 161.5 | 179.1 | 153.7 | 160.9 | 170.8 | 123.1 | 168.2 |
| CS/article thickness [MPa/$\mu$m] | 6.3 | 7.2 | 6.4 | 6.5 | 6.7 | 5.3 | 6.6 |
| CS/DoL [MPa/$\mu$m] | 168 | 98 | 140 | 124 | 126 | 64 | 147 |
| D [$\mu$m$^2$/h] | 14.2 | 54.4 | 21.1 | 28.1 | 28.7 | 69.5 | 20.2 |

## 3. Mechanical testing

Articles having compositions 1 and 2 were tested for their hardness and three-point bending (3PB) strength. Vickers hardness testing was performed on articles without ion exchanged layer. Three-point bending tests were done using the both non ion exchanged articles, and articles with compressive stress of a glass article having the compositions of Example 1 (CS = 1239 MPa, DoL = 10.0 $\mu$m) and Example 2(CS = 1431 MPa, DoL = 14.6 $\mu$m), for 200 $\mu$m thick glasses, respectively. The results are shown below.

*Table 4*

| Example No. | 1 | 2 |
|---|---|---|
| Vickers hardness | 603 | 607 |
| 3PB non-IOX [MPa] | 202 | 151 |
| 3PB IOX | 657 | 749 |

## 4. Further compositions

The following compositions are within the scope of this disclosure. The sum of components in the tables may add up to slightly more or less than 100%, which may be due to rounding. Fining agents, such as 0.1% $SnO_2$ and 0.2 Cl are not indicated in the tables below.

*Table 5*

| Example No. [wt.%] | 12 | 13 | 14 | 15 | 16 | 17 |
|---|---|---|---|---|---|---|
| $SiO_2$ | 55.9 | 55.9 | 58.5 | 62.7 | 52.2 | 52.3 |
| $Al_2O_3$ | 10.9 | 7.3 | 14.8 | 7.7 | 14.6 | 14.5 |
| $B_2O_3$ | 2.4 | 5.0 | 0.0 | 0.0 | 0.0 | 0.0 |
| $P_2O_5$ | 2.0 | 4.1 | 4.1 | 0.0 | 0.0 | 0.0 |
| $Na_2O$ | 15.0 | 12.6 | 15.3 | 16.9 | 12.7 | 15.9 |
| $K_2O$ | 1.5 | 2.7 | 0.0 | 2.8 | 2.7 | 2.7 |
| MgO | 1.4 | 0.0 | 0.0 | 0.0 | 2.9 | 0.0 |
| ZnO | 1.2 | 0.0 | 0.0 | 2.5 | 2.4 | 2.3 |
| $ZrO_2$ | 9.7 | 7.2 | 7.2 | 7.5 | 12.5 | 12.3 |

Table 6

| Example No. [wt.%] | 18 | 19 | 20 | 21 | 22 |
|---|---|---|---|---|---|
| $SiO_2$ | 55.8 | 52.1 | 65.2 | 52.5 | 52.9 |
| $Al_2O_3$ | 7.5 | 14.5 | 8.0 | 7.4 | 15.0 |
| $B_2O_3$ | 5.1 | 5.0 | 0.0 | 5.1 | 0.0 |
| $P_2O_5$ | 0.0 | 4.0 | 0.0 | 4.1 | 4.2 |
| $Na_2O$ | 16.4 | 12.3 | 16.0 | 13.6 | 15.5 |
| $K_2O$ | 0.0 | 2.7 | 0.0 | 0.0 | 0.0 |
| MgO | 0.0 | 0.0 | 3.1 | 2.3 | 3.0 |
| ZnO | 2.4 | 2.3 | 0.0 | 2.4 | 2.4 |
| $ZrO_2$ | 12.7 | 7.0 | 7.7 | 12.6 | 7.2 |

Table 7

| Example No. [wt.%] | 23 | 24 | 25 | 26 | 27 | 28 |
|---|---|---|---|---|---|---|
| $SiO_2$ | 51.1 | 53.8 | 62.1 | 53.6 | 56.0 | 57.1 |
| $Al_2O_3$ | 14.3 | 7.6 | 7.5 | 15.2 | 15.1 | 7.5 |
| $B_2O_3$ | 0.0 | 5.2 | 0.4 | 5.2 | 5.1 | 0.0 |
| $P_2O_5$ | 4.0 | 4.2 | 4.2 | 0.0 | 0.0 | 4.2 |
| $Na_2O$ | 15.7 | 16.6 | 13.3 | 12.9 | 16.5 | 12.9 |
| $K_2O$ | 2.6 | 2.8 | 2.8 | 2.8 | 0.0 | 2.8 |
| MgO | 0.2 | 2.4 | 0.0 | 3.0 | 0.0 | 3.0 |
| ZnO | 0.0 | 0.0 | 2.4 | 0.0 | 0.0 | 0.0 |
| $ZrO_2$ | 12.1 | 7.4 | 7.3 | 7.3 | 7.3 | 12.6 |

Table 8

| Example No. [wt.%] | 29 |
|---|---|
| $SiO_2$ | 53.8 |
| $Al_2O_3$ | 7.6 |
| $B_2O_3$ | 2.1 |
| $P_2O_5$ | 4.2 |
| $Na_2O$ | 16.7 |
| $K_2O$ | 2.8 |
| MgO | 3.0 |
| ZnO | 2.4 |
| $ZrO_2$ | 7.4 |

## 5. Chemical resistance

Hydrolytic resistance was tested according to ISO 719. Alkali resistance was measured according to ISO 695, and acid resistance was tested in accordance with DIN 12116. The results are shown in the following table.

| Example No. | 1 | 2 | 3 | 5 | 7 | 8 | 10 | 11 |
|---|---|---|---|---|---|---|---|---|
| hydrolytic resistance [$\mu$g/g] | 45 | 48 | 35 | 49 | 59 | 28 | 33 | 81 |
| alkali resistance [mg/dm$^2$] | 21 | 21 | 10 | 17 | 24 | 19 | 28 | 18 |
| acid resistance [mg/dm$^2$] | 6 | 9 | >5000 | 2 | 5 | 6 | 16 | 50 |

**Claims**

1. A glass comprising

   i. $SiO_2$,
   ii. $Al_2O_3$ and/or $B_2O_3$ in a total amount of 5.0 to 25.0% by weight,
   ii. $ZrO_2$ and/or $Y_2O_3$ in a total amount of at least 3.0% by weight,
   iii. a total amount of up from 10.0 to 40.0% by weight of one or more oxides selected from ZnO, $Li_2O$, $Na_2O$, $K_2O$, MgO, CaO, SrO, BaO, and combinations thereof, and
   iv. optionally one or more components selected from $P_2O_5$ and $TiO_2$.

2. Glass according to claim 1, having a coefficient of thermal expansion in a temperature range of from 20 to 300°C of less than $9.2*10^{-6}$ K$^{-1}$, less than $8.8*10^{-6}$ K$^{-1}$, less than $8.5*10^{-6}$ K$^{-1}$ or less than $8.2*10^{-6}$ K$^{-1}$.

3. Glass according to claim 1 or 2, comprising

   $SiO_2$ in an amount of at least 50.0% by weight or at least 55.0% by weight, and/or
   $K_2O$ in an amount of less than 3.0% by weight.

4. Glass according to one of the preceding claims, having a compressive stress susceptibility defined as a CSS$_{30\mu m}$ score of at least 800 MPa.

5. Glass according to one of the preceding claims, wherein the amount of $ZrO_2$ is at least 6.8% by weight, or >10.0% by weight.

6. Glass according to one of the preceding claims, wherein a ratio of the amount of $ZrO_2$ to the amount of $Al_2O_3$ in percent by weight of at least 0.30, or at least 0.45.

7. Glass according to one of the preceding claims, having a 1000 MPa IOX-time of less than 60 minutes.

8. Glass according to one or more of the preceding claims, having a glass transition temperature $T_g$ of at least 590°C, at least 610°C or at least 625°C.

9. Glass according to one or more of the preceding claims, the glass having a steepness of its temperature-viscosity curve **characterized by** a difference between its temperatures $T_4$ and $T_{7.6}$ of from 250 to 400 K.

10. Glass according to one or more of the preceding claims, wherein the glass has a diffusivity of at least 10 $\mu$m$^2$/h, or at least 18 $\mu$m$^2$/h.

11. Glass article comprising or consisting of a glass according to one of claims 1 to 10.

12. Glass article according to claim 11, having a thickness of less than 100 $\mu$m, less than 80 $\mu$m, or less than 60 $\mu$m, or less than 40 $\mu$m.

13. Glass article according to at least one of claims 11 to 12 comprising an ion exchanged layer on one or both of its major surfaces.

14. Glass article according to claim 13 having, on one or both of its major surfaces, a compressive stress of at least 400 MPa, at least 700 MPa, or at least 800 MPa.

15. Glass article according to claim 13 or 14 having, on one or both of its major surfaces, a ratio of compressive stress in MPa to article thickness in $\mu$m of at least 4.0, at least 5.0, or at least 20.0.

16. Glass article according to at least one of claims 13 to 15, having, on one or both of its major surfaces, a ratio of compressive stress in MPa to depth of ion exchanged layer in $\mu$m of at least 50, at least 75, or at least 90.

17. An electronic device comprising a glass according to any one of claims 1 to 10, and/or a glass article according to one of claim 11 to 16.

# EP 4 201 898 A1

Europäisches
Patentamt

European
Patent Office

Office européen
des brevets

## EUROPEAN SEARCH REPORT

**Application Number**

EP 21 21 6667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2008 097821 A (HOYA CORP) 24 April 2008 (2008-04-24) | 1-3,5,6, 8-17 | INV. C03C3/085 |
| A | * machine translated document; paragraphs [0001], [0003], [0026], [0051], [0067], [0083]; tables 1.1-1.4, 2.1, 2.2,4,5 * | 4,7 | C03C3/093 C03C3/097 C03C3/11 C03C4/20 C03C21/00 |
| | ----- | | |
| X | US 2005/244656 A1 (IKENISHI MIKIO [JP] ET AL) 3 November 2005 (2005-11-03) | 1-11, 13-17 | |
| A | * abstract; paragraphs [0001], [0025], [0026], [0027], [0090] – paragraphs [0093], [0104] – [0106], [0126], [0127], [0135], [0143], [0144]; examples 1-15 and comparative examples 1,2; tables 1-3 * | 12 | |
| | ----- | | |
| X | US 2017/174556 A1 (MIYABE DAISUKE [JP] ET AL) 22 June 2017 (2017-06-22) | 1-3, 7-11, 13-17 | |
| A | * abstract; paragraphs [0001], [0002], [0007], [0042], [0099] – paragraphs [and0109], [0121]; claims 4-7; example 5 of table 5; tables 1-5 * | 4-6,12 | **TECHNICAL FIELDS SEARCHED (IPC)** C03C |
| | ----- | | |
| X | US 9 102 566 B2 (NIPPON ELECTRIC GLASS CO [JP]) 11 August 2015 (2015-08-11) | 1-4,6-17 | |
| A | * columns 1,3,7,15, lines 15-20;37-47;18-20, 51-53;5,9-12 – column 16, lines 9-15; examples 7,8; table 1 * | 5 | |
| | ----- | | |
| X | WO 2014/122935 A1 (NIPPON SHEET GLASS CO LTD [JP]) 14 August 2014 (2014-08-14) | 1,3,4,6, 8-11, 13-17 | |
| A | * machine translated document; example 9; table 6 * | 2,5,7,12 | |
| | ----- | | |
| | -/-- | | |

The present search report has been drawn up for all claims

| Place of search | Date of completion of the search | Examiner |
|---|---|---|
| Munich | 21 June 2022 | Philippart, Anahí |

EPO FORM 1503 03.82 (P04C01)

page 1 of 2

Europäisches
Patentamt

European
Patent Office

Office européen
des brevets

**EUROPEAN SEARCH REPORT**

Application Number

**EP 21 21 6667**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 099 417 A (ZEISS STIFTUNG) 8 December 1982 (1982-12-08) | 1 | |
| A | * examples 1-4; table page 4 * ----- | 2-17 | |
| | | | TECHNICAL FIELDS SEARCHED (IPC) |

The present search report has been drawn up for all claims

| Place of search | Date of completion of the search | Examiner |
|---|---|---|
| Munich | 21 June 2022 | Philippart, Anahí |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 21 21 6667

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2022

| Patent document cited in search report | | Publication date | Patent family member(s) | | Publication date |
|---|---|---|---|---|---|
| JP 2008097821 | A | 24-04-2008 | AU | 749543 B2 | 27-06-2002 |
| | | | CA | 2262700 A1 | 10-12-1998 |
| | | | CN | 1228184 A | 08-09-1999 |
| | | | CN | 1558398 A | 29-12-2004 |
| | | | DE | 69835572 T2 | 09-08-2007 |
| | | | EP | 0917135 A1 | 19-05-1999 |
| | | | JP | 4098834 B2 | 11-06-2008 |
| | | | JP | 4134266 B2 | 20-08-2008 |
| | | | JP | 2008097821 A | 24-04-2008 |
| | | | KR | 20000068047 A | 25-11-2000 |
| | | | MY | 118378 A | 30-10-2004 |
| | | | WO | 9855993 A1 | 10-12-1998 |
| US 2005244656 | A1 | 03-11-2005 | CN | 1767006 A | 03-05-2006 |
| | | | JP | 4213077 B2 | 21-01-2009 |
| | | | JP | 2005314159 A | 10-11-2005 |
| | | | MY | 137031 A | 31-12-2008 |
| | | | US | 2005244656 A1 | 03-11-2005 |
| US 2017174556 | A1 | 22-06-2017 | CN | 106232540 A | 14-12-2016 |
| | | | JP | 6542758 B2 | 10-07-2019 |
| | | | JP | WO2015162845 A1 | 13-04-2017 |
| | | | KR | 20160145691 A | 20-12-2016 |
| | | | TW | 201542489 A | 16-11-2015 |
| | | | US | 2017174556 A1 | 22-06-2017 |
| | | | WO | 2015162845 A1 | 29-10-2015 |
| US 9102566 | B2 | 11-08-2015 | JP | 4936236 B2 | 23-05-2012 |
| | | | JP | 5115911 B2 | 09-01-2013 |
| | | | JP | 5152706 B2 | 27-02-2013 |
| | | | JP | 5448217 B2 | 19-03-2014 |
| | | | JP | 5633763 B2 | 03-12-2014 |
| | | | JP | 5751494 B2 | 22-07-2015 |
| | | | JP | 5790826 B2 | 07-10-2015 |
| | | | JP | 2008247732 A | 16-10-2008 |
| | | | JP | 2012025661 A | 09-02-2012 |
| | | | JP | 2012072058 A | 12-04-2012 |
| | | | JP | 2012158518 A | 23-08-2012 |
| | | | JP | 2012197222 A | 18-10-2012 |
| | | | JP | 2013014512 A | 24-01-2013 |
| | | | JP | 2013121910 A | 20-06-2013 |
| | | | JP | 2014055108 A | 27-03-2014 |
| | | | JP | 2014205610 A | 30-10-2014 |
| | | | TW | 200902467 A | 16-01-2009 |
| | | | TW | 201311598 A | 16-03-2013 |
| | | | TW | 201402501 A | 16-01-2014 |

EPO FORM P0459

For more details about this annex : see Official Journal of the European Patent Office, No. 12/82

page 1 of 2

This annex lists the patent family members relating to the patent documents cited in  the above-mentioned European search report.
The members are as contained in the European Patent Office EDP file on
The European Patent Office is in no way liable for these particulars which are merely given for the purpose of information.

21-06-2022

| Patent document cited in search report | | Publication date | Patent family member(s) | | Publication date |
|---|---|---|---|---|---|
| | | | TW | 201402502 A | 16-01-2014 |
| | | | TW | 201418185 A | 16-05-2014 |
| | | | US | 2010119846 A1 | 13-05-2010 |
| | | | US | 2013199241 A1 | 08-08-2013 |
| | | | WO | 2008108332 A1 | 12-09-2008 |
| WO 2014122935 | A1 | 14-08-2014 | CN | 104995143 A | 21-10-2015 |
| | | | JP | 5957097 B2 | 27-07-2016 |
| | | | JP | WO2014122935 A1 | 26-01-2017 |
| | | | KR | 20150110646 A | 02-10-2015 |
| | | | US | 2015376050 A1 | 31-12-2015 |
| | | | WO | 2014122935 A1 | 14-08-2014 |
| GB 2099417 | A | 08-12-1982 | BR | 8203146 A | 17-05-1983 |
| | | | DE | 3121824 A1 | 03-02-1983 |
| | | | ES | 8308291 A2 | 01-09-1983 |
| | | | FR | 2510546 A2 | 04-02-1983 |
| | | | GB | 2099417 A | 08-12-1982 |
| | | | IT | 1157016 B | 11-02-1987 |
| | | | JP | S638056 B2 | 19-02-1988 |
| | | | JP | S57200249 A | 08-12-1982 |

EPO FORM P0459

For more details about this annex : see Official Journal of the European Patent Office, No. 12/82